(19) Europäisches Patentamt
European Patent Office
Office européen des brevets

(11) **EP 4 422 220 A1**

(12) **EUROPEAN PATENT APPLICATION**
published in accordance with Art. 153(4) EPC

(43) Date of publication:
**28.08.2024 Bulletin 2024/35**

(21) Application number: **22882921.4**

(22) Date of filing: **19.10.2022**

(51) International Patent Classification (IPC):
***H04W 4/06*** (2009.01)

(52) Cooperative Patent Classification (CPC):
**H04W 4/06; H04W 68/00; H04W 76/27**

(86) International application number:
**PCT/CN2022/126257**

(87) International publication number:
**WO 2023/066316 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.10.2021 CN 202111236108**

(71) Applicant: **Huawei Technologies Co., Ltd.**
**Shenzhen, Guangdong 518129 (CN)**

(72) Inventors:
• **LIU, Nannan**
  **Shenzhen, Guangdong 518129 (CN)**
• **LI, Bingzhao**
  **Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(54) **COMMUNICATION METHOD AND APPARATUS, AND STORAGE MEDIUM**

(57) Embodiments of this application provide a communication method and apparatus, and a storage medium. The method is used to page, by using a paging message, a terminal device that joins a multicast service, so that the terminal device attempts to enter an RRC connected state to receive data of the multicast service. In this application, the terminal device receives a first paging message, and initiates radio resource control RRC connection resume when a first condition is met. The first condition includes: The first paging message includes an identifier of a first multicast service and does not include an identifier of the terminal device; or the first paging message includes the identifier of the first multicast service and a first identifier of the terminal device, where the first identifier is associated with RAN paging. Because the first paging message may carry the identifier of the first multicast service, a terminal device corresponding to the first multicast service may be paged by using the first paging message, so that the terminal device attempts to enter the RRC connected state based on the first paging message to receive data of the first multicast service.

FIG. 3a

**Description**

**CROSS-REFERENCE TO RELATED APPLICATIONS**

This application claims priority to Chinese Patent Application No. 202111236108.7, filed with the China National Intellectual Property Administration on October 22, 2021 and entitled "COMMUNICATION METHOD AND APPARATUS, AND STORAGE MEDIUM", which is incorporated herein by reference in its entirety.

**TECHNICAL FIELD**

This application relates to the communication field, and in particular, to a communication method and apparatus, and a storage medium.

**BACKGROUND**

In a wireless communication system, a network device may page a terminal device in an RRC idle state or an RRC inactive state by sending a paging message. Alternatively, the network device may send a short message service to notify a terminal device in an RRC idle state, an RRC inactive state, or an RRC connected state of a system information change, an earthquake and tsunami warning system (earthquake and tsunami warning system, ETWS) notification, or a commercial mobile alert system (commercial mobile alert system, CMAS) notification. After receiving the paging message, the terminal device in the RRC idle state or the RRC inactive state may enter the RRC connected state.

A multicast broadcast service (multicast broadcast service, MBS) is introduced by the 3GPP to effectively utilize a mobile communication network resource. The multicast broadcast service provides a point-to-multipoint service in which a data source sends data to a plurality of users in a mobile communication network, to implement network resource sharing and improve resource utilization, in particular, for air interface resources.

Currently, in the MBS, after a multicast service is deactivated, a terminal device may be in the RRC connected state, but may alternatively be in the RRC idle state or the RRC inactive state. After the multicast service is activated, the terminal device in the RRC idle state and the RRC inactive state cannot successfully or promptly receive data of the multicast service.

**SUMMARY**

Embodiments of this application provide a communication method and apparatus, and a storage medium. The method is used to page, by using a paging message, a terminal device that joins a multicast service, so that the terminal device attempts to enter an RRC connected state to receive data of the multicast service.

According to a first aspect, an embodiment of this application provides a communication method. A terminal device receives a first paging message, and initiates radio resource control RRC connection resume when a first condition is met. The first condition includes: The first paging message includes an identifier of a first multicast service and does not include an identifier of the terminal device; or the first paging message includes the identifier of the first multicast service and a first identifier of the terminal device. The first identifier is associated with RAN paging.

Because the first paging message may carry the identifier of the first multicast service, a terminal device corresponding to the first multicast service may be paged by using the first paging message, so that the terminal device attempts to enter an RRC connected state based on the first paging message. The terminal device entering the RRC connected state may receive data of the first multicast service. It can be learned that, according to the solution provided in embodiments of this application, a terminal device in an RRC inactive state is enabled to enter the RRC connected state. A solution is provided for the terminal device in the RRC inactive state that cannot successfully or promptly receive the data of the first multicast service.

In a possible implementation, that the terminal device initiates RRC connection resume may specifically include: The terminal device sends a first message. The first message is used to request to resume an RRC connection. For example, the terminal device may send the RRC connection resume to a network device, and the network device resumes the RRC connection based on a stored context of the terminal device, so that the terminal device can enter the RRC connected state more quickly.

In a possible implementation, when determining to initiate RRC connection resume, the terminal device may further determine an RRC connection resume cause. There are a plurality of determining manners. For example, when the first paging message includes the identifier of the first multicast service and the first identifier of the terminal device, the terminal device may determine a first RRC connection resume cause according to a first policy. The first policy includes at least one of an access identity, an RRC connection resume cause corresponding to unicast, or a rule for determining an RRC connection resume cause corresponding to unicast.

For another example, the terminal device may alternatively determine the first RRC connection resume cause according to a second policy. The second policy includes at least one of an access identity corresponding to multicast, an RRC connection resume cause corresponding to multicast, or a rule for determining an RRC connection resume cause corresponding to multicast.

For another example, the terminal device may alternatively determine the first RRC connection resume cause according to a third policy. The third policy includes at least one of an access identity, an RRC connection resume cause corresponding to unicast and multicast, or a rule for determining an RRC connection resume cause corresponding to unicast and multicast.

For another example, the terminal device may alternatively determine the first RRC connection resume cause according to the first policy and the second policy. For example, the terminal device determines a second RRC connection resume cause according to the first policy. The terminal device determines a third RRC connection resume cause according to the second policy. The terminal device determines either the second RRC connection resume cause or the third RRC connection resume cause as the first RRC connection resume cause. For example, an RRC connection resume cause with a highest priority may be selected from the second RRC connection resume cause and the third RRC connection resume cause as the first RRC connection resume cause.

When the first paging message includes the identifier of the first multicast service but does not include the identifier of the terminal device, the terminal device may determine the first RRC connection resume cause according to the second policy.

In a possible implementation, after the terminal device receives the first paging message, when a second condition is met, the terminal device enters an RRC idle state. The second condition includes: The first paging message includes the identifier of the first multicast service and a second identifier of the terminal device, where the second identifier is associated with CN paging; or the first paging message includes the second identifier of the terminal device. In this way, when the second condition is met, the terminal device in the RRC inactive state may enter the RRC connected state from the RRC idle state. For example, after the terminal device enters the RRC idle state, the terminal device may send a second message. The second message is used to request to set up the RRC connection. In this way, the terminal device in the RRC inactive state may select, based on content carried in the received first paging message, a manner of entering the RRC connected state. In addition, when the second condition is met, entering the RRC idle state may be better compatible with a manner of entering the RRC connected state by the terminal device in a unicast case.

In a possible implementation, the identifier of the first multicast service includes the identifier of the first multicast service to which the terminal device joins. For example, the terminal device may subscribe to the first multicast service in advance. In this way, the terminal device may determine, based on the identifier of the first multicast service in the first paging message, whether to respond to the first paging message.

According to a second aspect, an embodiment of this application provides a communication method. The method includes: A first network device receives a second paging message. The second paging message includes a third identifier of a second multicast service. The first network device performs one or more of the following:

The first network device triggers RAN paging; the first network device pages a terminal device, where the terminal device is in an RRC inactive state, and the terminal device is associated with the second multicast service; or the first network device sends a third paging message to a second network device, where the third paging message indicates the second network device to page the terminal device.

Because the second paging message may trigger the first network device to initiate RAN paging, the first network device may not only page, based on the second paging message, a terminal device that corresponds to the second multicast service and that is in an RRC idle state, but also page the terminal device in the RRC inactive state. Therefore, a delay in entering an RRC connected state by the terminal device in the RRC inactive state can be reduced.

In another case, after receiving the second paging message, the first network device pages the terminal device in the RRC inactive state. Therefore, the delay in entering the RRC connected state by the terminal device in the RRC inactive state can be reduced.

In still another case, after receiving the second paging message, the first network device indicates the second network device to page the terminal device in the RRC inactive state. Therefore, the delay in entering the RRC connected state by the terminal device in the RRC inactive state can be reduced.

In a possible implementation, that the first network device pages a terminal device may specifically include: The first network device sends first control information and a fourth paging message. The first control information is used to schedule the fourth paging message, and the fourth paging message includes a third identifier of the second multicast service and/or an identifier of the terminal device; or the fourth paging message includes a fourth identifier of the second multicast service and/or an identifier of the terminal device. For example, the first network device may calculate a first paging occasion of the terminal device in the RRC inactive state, and send the first control information on the first paging occasion, so that the terminal device receives the fourth paging message based on the first control information.

In a possible implementation, because the network device side does not need to be notified of movement of the terminal device in a cell corresponding to a RAN, that the first network device pages a terminal device may specifically include: The first network device pages the terminal device in a cell corresponding to an RNA. In this way, efficiency of paging the terminal device can be improved.

In a possible implementation, the first network device sends a third paging message to the second network device, where the third paging message includes one of the following: the identifier of the terminal device; the identifier of the terminal device and a DRX cycle of the terminal device; the identifier of the terminal device, the DRX cycle of the terminal device, and the third identifier of the second multicast service, the fourth identifier of the second multicast service, or a fifth identifier of the second multicast service; or the third identifier of the second multicast service, the fourth identifier of the second multicast service, or the fifth identifier of the second multicast service.

In a possible implementation, the first network device is a last serving node of the terminal device. In this way, the efficiency of paging the terminal device can be improved.

In a possible implementation, the second network device is located in the RNA corresponding to the terminal device. In this way, the first network device indicates the second network device in the RNA to page the terminal device, so that the efficiency of paging the terminal device can be improved.

In a possible implementation, after receiving the second paging message, the first network device may further determine the terminal device based on the third identifier of the second multicast service. Specifically, the terminal device in the RRC idle state and the terminal device in the RRC inactive state may be determined. Based on this, the terminal device in the RRC idle state and the terminal device in the RRC inactive state may be paged.

Corresponding to any communication method according to the first aspect and the second aspect, this application further provides a communication apparatus. The communication apparatus may be any sending device or any receiving device that transmits data in a wireless manner, for example, a communication chip, a terminal device, or a first network device (the first network device may be an access network device, a core network device, or the like). In a communication process, a sending device and a receiving device are relative to each other. In some communication processes, the communication apparatus may be used as the foregoing first network device or a communication chip that may be used in the first network device. In some communication processes, the communication apparatus may be used as the foregoing terminal device or a communication chip that may be used in the terminal device.

According to a third aspect, a communication apparatus is provided. The communication apparatus includes a transceiver unit and a processing unit, to perform any implementation of any communication method according to the first aspect and the second aspect. The transceiver unit is configured to perform functions related to sending and receiving. Optionally, the transceiver unit includes a receiving unit and a sending unit. In a design, the communication apparatus is a communication chip, and the transceiver unit may be an input/output circuit or a port of the communication chip.

In another design, the transceiver unit may be a transmitter and a receiver, or the transceiver unit may be a transmitter and a receiver.

Optionally, the communication apparatus further includes modules that may be configured to perform any implementation of any communication method according to the first aspect and the second aspect.

According to a fourth aspect, a communication apparatus is provided, and the communication apparatus is the foregoing terminal device or first network device. The communication apparatus includes a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of any communication method according to the first aspect and the second aspect.

Optionally, there are one or more processors, and there are one or more memories.

Optionally, the memory may be integrated with the processor, or the memory is disposed separately from the processor.

Optionally, the transceiver may include a transmitting machine (transmitter) and a receiving machine (receiver).

According to a fifth aspect, a communication apparatus is provided, including a processor. The processor is coupled to a memory, and may be configured to perform the method according to either of the first aspect and the second aspect and any one of the possible implementations of the first aspect and the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is a terminal device, the communication interface may be a transceiver or an input/output interface. Optionally, the transceiver may be a transceiver circuit. Optionally, the input/output interface may be an input/output circuit.

In another implementation, the communication apparatus is a first network device. When the communication apparatus is the first network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

According to a sixth aspect, a system is provided. The system includes the foregoing terminal device and first network device.

According to a seventh aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or perform the method according to any implementation of the first aspect and the second aspect.

According to a ninth aspect, a chip system is provided. The chip system may include a processor. The processor is coupled to a memory, and may be configured to perform the method according to either of the first aspect and the second aspect and any one of the possible implementations of the first aspect and the second aspect. Optionally, the chip system further includes a memory. The memory is configured to store a computer program (which may also be referred to as code or instructions). The processor is configured to invoke the computer program from the memory and run the computer program, so that a device on which the chip system is mounted performs the method according to either of the first aspect and the second aspect and any one of the possible implementations of the first aspect and the second aspect.

According to a tenth aspect, a processing apparatus is provided, including an input circuit, an output circuit, and a processing circuit. The processing circuit is configured to: receive a signal by using the input circuit, and transmit a signal by using the output circuit, so that the method according to either of the first aspect and the second aspect and any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

## BRIEF DESCRIPTION OF DRAWINGS

FIG. 1 is a schematic diagram of a possible system architecture to which embodiments of this application are applicable;
FIG. 2 is a schematic diagram of another possible system architecture to which embodiments of this application are applicable;
FIG. 3a is a schematic flowchart of a communication method according to an embodiment of this application;
FIG. 3b is a schematic flowchart of a communication method according to an embodiment of this application;
FIG. 4 is a schematic flowchart of a communication method according to an embodiment of this application;
FIG. 5 is a schematic diagram of a structure of a communication apparatus according to an embodiment of this application; and
FIG. 6 is a schematic diagram of a structure of another communication apparatus according to an embodiment of this application; and
FIG. 7 is a schematic diagram of a structure of another communication apparatus according to an embodiment of this application.

## DESCRIPTION OF EMBODIMENTS

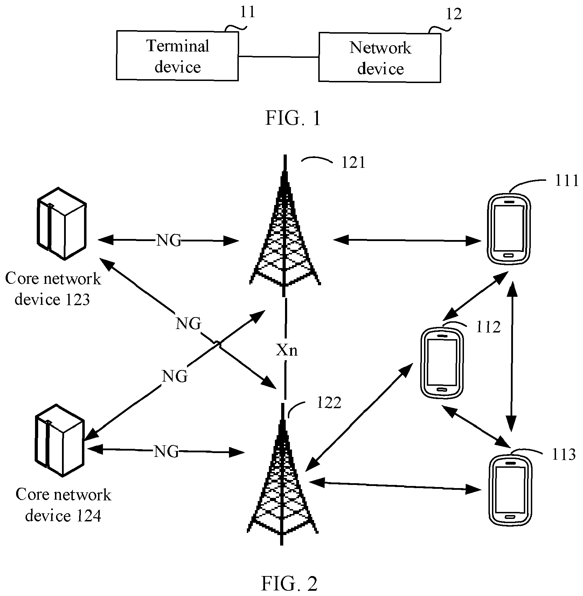

FIG. 1 is an example of a schematic diagram of a system architecture according to an embodiment of this application. As shown in FIG. 1, the system architecture includes a terminal device 101 and a network device 102. The terminal device may receive a first paging message from the network device 102. The terminal device initiates RRC connection resume when a first condition is met.

The first condition includes one of the following content: The first paging message includes an identifier of a first multicast service and does not include an identifier of the terminal device; or the first paging message includes the identifier of the first multicast service and a first identifier of the terminal device. The first identifier of the terminal device is associated with radio access network RAN paging.

Because the first paging message may carry the identifier of the first multicast service, a terminal device corresponding to the first multicast service may be paged by using the first paging message, so that the terminal device attempts to enter an RRC connected state based on the first paging message. The terminal device entering the RRC connected state may receive data of the first multicast service. It can be learned that, according to the solution provided in embodiments of this application, a terminal device in an RRC inactive state is enabled to enter the RRC connected state. A solution is provided for the terminal device in the RRC inactive state that cannot successfully or promptly receive the data of the first multicast service.

Further, when the first paging message carries the identifier of the first multicast service and does not carry an identifier of a first terminal device, or when the first paging message includes the identifier of the first multicast service and a first identifier of the first terminal device, the first identifier is an identifier associated with the RAN paging. In this way, the terminal device may initiate RRC connection resume to attempt to enter the RRC connected state, so that a delay of entering the RRC connected state by the first terminal device can be reduced.

As shown in FIG. 2, a communication method provided in embodiments of this application may be used in a wireless communication system, and the wireless communication system may include a terminal device and a network device. The terminal device 11 in FIG. 1 may be any terminal device in FIG. 2 (for example, a terminal device 111, a terminal device 112, or a terminal device 113 shown in FIG. 2). The network device 12 in FIG. 1 may be an access network device in FIG. 2 (for example, a base station 121 or a base station 122 in FIG. 2), and may alternatively be a core network device in FIG. 2 (for example, a core network device 123 or a core network device 124 in FIG. 2). The following describes a wireless communication system to which embodiments of this application are applicable with reference to FIG. 2.

It should be understood that the foregoing wireless communication system is applicable to both a low frequency scenario (sub 6G) and a high frequency scenario (above 6G). An application scenario of the wireless communication system includes but is not limited to a long term evolution (long term evolution, LTE) system, a fifth generation system, a new radio (new radio, NR) communication system, a future evolved public land mobile network (public land mobile network, PLMN) system, or the like. An application scenario of the wireless communication system may also include a central unit (central unit, CU)-distributed unit (distributed unit, DU) architecture.

The terminal device (for example, the terminal device 111, the terminal device 112, or the terminal device 113 shown in FIG. 2) shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device may have a wireless transceiver function, can communicate (for example, perform wireless communication) with one or more network devices in one or more communication systems, and accept a network service provided by the network device. The network device herein includes but is not limited to the network device shown in FIG. 2 (for example, the base station 121, the base station 122, the core network device 123, or the core network device 124 in FIG. 2).

The terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, a terminal apparatus in a future 5G network, a terminal apparatus in a future evolved PLMN network, or the like.

In addition, the terminal device may be deployed on land, where the deployment includes indoor or outdoor, or handheld or in-vehicle deployment, the terminal device may be deployed on water (for example, on a ship), or the terminal device may be deployed in air (for example, on an airplane, a balloon, or a satellite). The terminal device may specifically be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a communication chip having a communication module, a vehicle having a communication function, a vehicle-mounted device (for example, a vehicle-mounted communication apparatus or a vehicle-mounted communication chip), or the like.

In embodiments of this application, the network device may be an access network device (or referred to as an access network site), or may be a core network device. Description is separately provided below.

In a first case, the network device may be an access network device (or referred to as an access network site).

When the network device is the access network device, the network device may be further connected to a core network (core network, CN) device. The access network device is a device that provides a network access function, for example, a radio access network (radio access network, RAN) or a base station. The network device may specifically include a base station (base station, BS) (for example, a RAN base station), or include a base station and a radio resource management device configured to control the base station, or the like. The network device may further include a relay station (a relay device), an access point, a base station in a future 5G network, a base station in a future evolved PLMN network, an NR base station, or the like. The network device may be a wearable device or a vehicle-mounted device. Alternatively, the network device may be a communication chip having a communication module.

For example, the network device includes but is not limited to: a next generation NodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), a mobile switching center, a base transceiver station (base transceiver station, BTS) in a global system for mobile communications (global system for mobile communications, GSM) or code division multiple access (code division multiple access, CDMA) network, a node base station (node base station, NB) in wideband code division multiple access (wideband code division multiple access, WCDMA), an evolved (evolved) NB (eNB or eNodeB) in LTE, a base station device in a future 5G network, an access network device in a future evolved PLMN network, a wearable device, or a vehicle-mounted device.

In a second case, the network device may be a core network device.

The core network device may be configured to provide a core network service for a terminal device that accesses the network device. The core network device may correspond to different devices in different systems. For example, in 3G, the core network device may correspond to a serving general packet radio service (general packet radio service, GPRS) support node (serving GPRS support node, SGSN) and/or a gateway GPRS support node

(gateway GPRS support node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

A system architecture shown in FIG. 2 is described by using a 5G network as an example. As shown in FIG. 2, an access network device (the access network device may also be referred to as a next generation radio access network (next generation radio access network, NG-RAN) node) may include a gNB and a ng-eNB. The gNB may be, for example, the base station 121 in FIG. 2, and the ng-eNB may be, for example, the base station 122 in FIG. 2. The gNB is connected to the ng-eNB through an Xn interface.

The access network device may be connected to the core network device through an NG interface. For example, the access network device may be connected to the AMF through an NG-C interface, and may be connected to the UPF through an NG-U interface. The NG-C interface may also be referred to as a control plane interface between the NG-RAN and a 5GC. The NG-U interface may also be referred to as a user plane interface between the NG-RAN and the 5GC.

The following explains and describes nouns and terms in embodiments of this application.

1. Paging (paging)

A purpose of the paging is:

allowing a network to reach UEs in RRC_IDLE and RRC_INACTIVE states by using paging messages; and notifying, by using short message services, UEs in RRC_IDLE, RRC_INACTIVE, and RRC_CONNECTED states of a system information change and an ETWS or CMAS indication, where the paging message may be sent on a PDSCH, and the short message service may be directly sent on a PDCCH (that is, DCI).

The UE in the RRC_IDEL state monitors a paging control channel (paging control channel, paging control channel, PCCH) of paging triggered by a CN, and the UE in the RRC_INACTIVE state further monitors a paging control channel of paging triggered by a RAN. When the UE receives the paging initiated by the RAN, the UE starts an RRC connection resume process and determines a resume cause based on a value of an AI (access identity) configured by an upper layer. When the UE in the RRC_INACTIVE state receives the paging initiated by the CN, the UE changes to RRC_IDLE and notifies a NAS layer. This may be referred to as unicast-related paging.

For example, RAN paging may be understood as the paging initiated by the RAN.

For example, CN paging may be understood as the paging initiated by the CN.

A paging occasion in embodiments of this application may include one or more radio frames, subframes, slots, or the like. This is not limited.

A time domain resource in embodiments of this application may be an interval, for example, a radio frame, a subframe, a slot (slot), a symbol, or a mini-slot (mini-slot). This is not limited.

One DRX cycle may have one or more PFs, and each PF may have one or more paging occasions (paging occasion, PO).

From a perspective of monitoring paging by a terminal device, currently, for a case in which discontinuous reception (discontinuous reception, DRX) is configured for a terminal device in an RRC idle or inactive state, the terminal device monitors one PO in each DRX cycle (cycle) to save energy. One PO may include a group of PDCCH monitoring occasions (monitoring occasions). One paging frame (paging frame, PF) may be a radio frame, and may include one or more POs or start points of one or more POs.

Generally, for the terminal device in the RRC idle state or the terminal device in the RRC inactive state, the terminal device wakes up (that is, monitors paging) for one time in a PO corresponding to the terminal device in each paging cycle, and cares about scheduling information of a paging message and a short message service (short message).

Downlink control information (downlink control information, DCI) corresponding to the paging message is scrambled by using a paging radio network temporary identifier (paging radio network temporary identifier, P-RNTI).

Currently, a time domain location of the PO may be determined by a terminal device identifier (UE ID).

For example, the PF may be obtained according to the following formula:

$$(SFN + PF\_offset) \bmod T = (T \operatorname{div} N) * (UE\_ID \bmod N).$$

An index (index (i_s)) of the PO is obtained according to the following formula:

$$i\_s = floor(UE\_ID/N) \bmod Ns.$$

i_s: The UE determines, by using i_s, a PO that is of the PF and that corresponds to the UE.

T indicates a DRX cycle of the UE.

N indicates a quantity of paging frames of the DRX cycle.

Ns indicates a quantity of POs of the paging frame.

UE_ID is 5G-S-TMSI mod 1024, where mod indicates a modulo operation. If the UE does not have a 5G-S-TMSI, for example, when the UE is not registered with the network, the UE needs to use UE_ID = 0.

Values of N, Ns, and PF_offset may be broadcast by a network in system information SIB 1.

T is the DRX cycle, and may be determined according to the following rule. The terminal device in the RRC idle state and the terminal device in the RRC inactive state may use shortest available DRX cycles.

The UE in the RRC_IDLE state uses a shorter DRX cycle in (1) and (2); and the UE in the RRC_INACTIVE state uses a shortest DRX cycle in (1), (2), and (3):

(1) a default DRX cycle broadcast in the system information (SIB 1);
(2) a UE-specific DRX cycle negotiated by the UE and a core network; and
(3) a UE-specific DRX cycle sent by a network (for example, a radio access network) to the UE.

2. RRC connected state, RRC inactive state, or RRC idle state

There are three RRC connection states: the RRC connected (RRC_connected) state, the RRC inactive (RRC_inactive) state, and the RRC idle (RRC_idle) state.

When accessing a network and setting up an RRC connection to a serving base station, the terminal device is in the RRC connected state. In this case, the terminal device may normally exchange data and signaling with the serving base station.

For a terminal device in the RRC idle state, the serving base station releases context information of the terminal device, and it takes long time for the terminal device to enter the RRC connected state from the RRC idle state.

The RRC inactive state is a state between the RRC connected state and the RRC idle state.

A terminal device in the RRC inactive state initiates RRC connection resume (for example, may send an RRC connection resume request message), to attempt to enter the RRC connected state. In comparison with a process in which the terminal device enters the RRC connected state from the RRC idle state, a lower latency can be implemented for the terminal device to enter the RRC connected state from the RRC inactive state.

3. Radio access network-based notification area (RAN-based notification area, RNA).

When a terminal device is switched from an RRC connected state to an RRC inactive state, a serving base station may configure the RNA for the terminal device, and the terminal device may move within the RNA without notifying the serving base station.

When the terminal device moves out of the RNA, an RNA update process is initiated. When a network has data to be sent to the terminal device, a paging process may be initiated in the RNA, so that the terminal device enters the RRC connected state from the RRC inactive state.

4. Multicast and unicast

The multicast service mentioned in embodiments of this application may be a multimedia broadcast multicast service (multimedia broadcast multicast service, MBMS in LTE) or a multicast broadcast service (multicast broadcast service, MBS) in a new radio (new radio, NR) system. The MBS is introduced by the 3GPP to effectively utilize a mobile communication network resource. The MBS provides a point-to-multipoint service in which a data source sends data to a plurality of users in a mobile communication network, to implement network resource sharing and improve resource utilization, in particular, for air interface resources. The NR MBS supports the multicast and the broadcast.

In embodiments of this application, "multicast" may alternatively be a term, for example, "groupcast". Correspondingly, the multicast service may alternatively be a groupcast service, and an identifier of the multicast service may alternatively be an identifier of the groupcast service.

It should be noted that a same service and/or same content data may be simultaneously provided for all terminal devices within a geographical area. The broadcast (broadcast) may be targeted at all terminal devices within an area.

A same service and/or same content data may be simultaneously provided for a group of dedicated terminal devices (in other words, not all terminal devices within coverage are authorized to receive the data) through multicast.

The multicast may be targeted at a specific group of terminal devices, and the terminal devices may need to perform a "group joining process".

Correspondingly, the unicast may be understood as simultaneously providing a same service and/or same content data to one terminal device. The unicast may be understood as follows: If one piece of data needs to be sent to a plurality of devices, the data needs to be sent to each device separately.

It should be noted that, in this application, an identifier may include, may alternatively be, or may be understood as information, and is not necessarily limited to an identifier

It should be noted that, in this application, multicast service activation may include, may alternatively be, or may be understood as multicast session activation or MBS session activation.

It should be noted that, in this application, the multicast service may include, may alternatively be, or may be understood as a multicast session, an MBS session, or an MBS service.

For example, unicast-related paging or unicast paging may include RAN paging and/or CN paging.

In the conventional technology, a multicast service has a corresponding multicast session. The multicast session has an activated state and a deactivated state. For a terminal device that has joined the multicast session, when the multicast session is deactivated and the terminal device has no unicast service, the terminal device may enter an RRC idle state, or may enter an RRC inactive state. When the multicast session is activated, a network device needs to send a multicast session activation notification to indicate the terminal device to enter a connected state to receive data of the multicast service.

Currently, the network device may send the multicast activation notification (for example, may be referred to as multicast-related paging) by sending a paging message, where the paging message may include an identifier of the multicast service (the identifier of the multicast service may also be referred to as an identifier (identifier, ID) of the MBS). After a terminal device receives the paging message, the terminal device in an RRC connected state may initiate RRC connection resume to enter an RRC connected state. In addition, control information corresponding to the paging message used to notify the multicast activation notification is also sent at a location of an existing PO (for example, the calculation-related content of the PO described above may be referred to as a unicast PO) of the UE. This causes a new case: One paging message may include both unicast-related paging and multicast-related paging for one terminal device. In this case, because processing performed by the terminal device after receiving the unicast-related paging may be different from processing performed by the terminal device after receiving the multicast-related paging, currently there is no effective method to determine processing performed by the terminal device. For example, the terminal device enters the RRC idle state after receiving the CN paging, and the terminal device initiates RRC connection resume after receiving the multicast-related paging. Because processing performed by the terminal device receiving the CN paging is different from processing performed by the terminal device receiving the multicast-related paging, the terminal device needs to determine to-be-performed processing. For example, the terminal device initiates RRC connection resume after receiving the RAN paging, and the terminal device initiates RRC connection resume after receiving the multicast-related paging. If receiving the RAN paging by the terminal device corresponds to receiving the multicast-related paging by the terminal device, and RRC connection resume causes determined by the terminal device are different, the terminal device needs to determine to-be-performed processing.

In view of this, an embodiment of this application provides a communication method to resolve this problem. The following describes the solutions provided in this application based on the foregoing content.

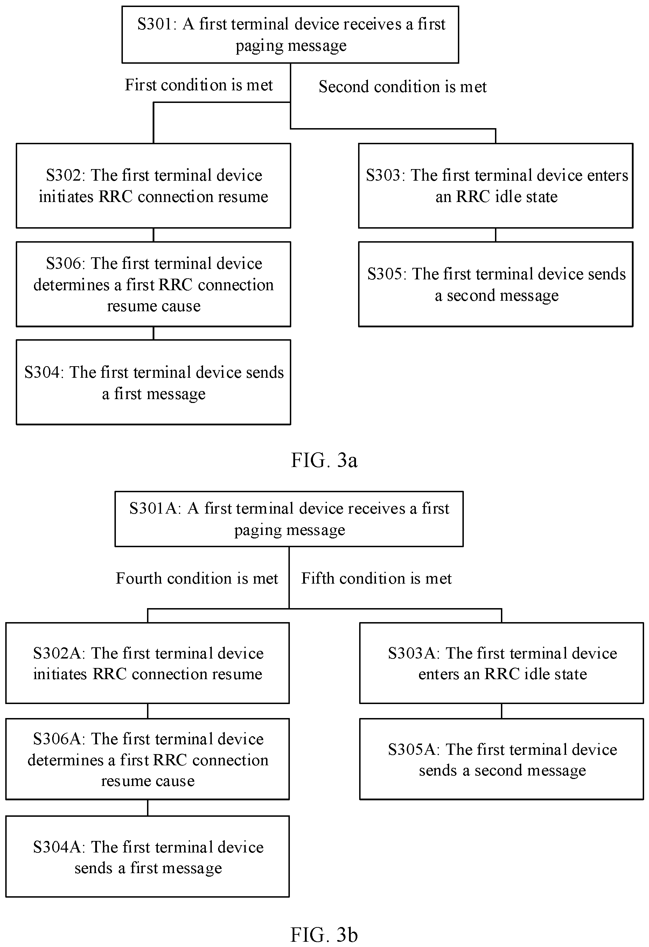

Based on the foregoing content, FIG. 3a is an example of a schematic flowchart of a communication method according to an embodiment of this application. The communication method shown in FIG. 3a may be applicable to the system architecture shown in FIG. 1 and/or FIG. 2. For example, a solution executed by a first terminal device in FIG. 3a may be executed by the terminal device 11 in FIG. 1, may alternatively be executed by a module or a chip of the terminal device 11, may alternatively be executed by the terminal device (for example, the terminal device 111, the terminal device 112, or the terminal device 113) in FIG. 2, or may alternatively be executed by a module or a chip of the terminal device (for example, the terminal device 111, the terminal device 112, or the terminal device 113) in FIG. 2. For another example, a solution executed by a fourth network device in FIG. 3a may be executed by the network device 12 in FIG. 1, may alternatively be executed by a module or a chip of the network device 12, may alternatively be executed by the network device (for example, the access network device 121, the access network device 122, the core network device 123, or the core network device 124) in FIG. 2, or may alternatively be executed by a module or a chip of the network device (for example, the access network device 121, the access network device 122, the core network device 123, or the core network device 124) in FIG. 2.

It should be noted that the solutions in this application are described by using the terminal device and the network device as examples. However, that the solutions in this application are applicable only to the terminal device and the network device is not limited, and the solutions may alternatively be applicable to a device to which the solutions in this application can be applied, where the terminal device may alternatively be a device, and the network device may alternatively be a device.

As shown in FIG. 3a, the method includes the following steps.

S301: The first terminal device receives a first paging message.

For example, in S301, the first terminal device may receive the first paging message from the fourth network device.

For example, the fourth network device may be an access network device.

In this embodiment of this application, when the network device needs to page the first terminal device due to unicast, the network device may send the paging message to the first terminal device. In this case, the paging message needs to carry an identifier of the first terminal device. When the network device needs to page the first terminal device due to multicast (for example, a first multicast service), the network device also needs to send the paging message to the first terminal device. In this case, the paging message may carry an identifier of the first multicast service. When the network device needs to page the first terminal device due to unicast and multicast (for example, the first multicast service), the paging message sent by the network device to the first terminal device may carry both the identifier of the first terminal device and the identifier of the first multicast service.

In a possible implementation, the first paging message may be used for any one or more of the following: used to notify that the first multicast service is activated, used to notify that a first multicast session is activated, used to page a terminal device related to the first multicast service, used to page the first terminal device related to the first multicast service, or used to page a terminal device (for example, the first terminal device).

For example, in S301, the first terminal device may be in an RRC inactive state.

After step S301, the first terminal device may perform the following step S302 or S303.

S302: The first terminal device initiates RRC connection resume.

S303: The first terminal device enters an RRC idle state.

When a first condition is met, the first terminal device may perform step S302.

When a second condition is met, the first terminal device may perform step S303.

Based on the solution shown in FIG. 3a, after receiving the first paging message, the first terminal device may attempt to enter an RRC connected state in different manners under different conditions, so that a delay of entering the RRC connected state by the first terminal device can be reduced. For example, when the first paging message includes the identifier of the first multicast service and a second identifier of the first terminal device (condition 4), if the first terminal device first initiates RRC connection resume after receiving the first paging message, and if the network device cannot obtain, confirm, or verify a UE context of the first terminal device, the first terminal device needs to fall back to RRC connection setup. However, processing in this embodiment of this application can enable the first terminal device to enter the RRC idle state after receiving the first paging message, and attempt to enter the RRC connected state through RRC connection setup, so that the first terminal device can enter the RRC connected state more quickly. In addition, it should be noted that "the network device cannot obtain or confirm a UE context of the first terminal device" may involve interaction between the network device and the terminal device, and it may also take some time, resulting in a delay.

In S302, "the first terminal device initiates RRC connection resume" may include, may alternatively be, or may be understood as: The first terminal device initiates the RRC connection resume process.

For content related to the RRC connection resume, refer to content in the section 5.3.13 (5.3.13 RRC connection resume) of "NR; Radio Resource Control (RRC); Protocol specification" in 3GPP TS 38.331. Details are not described herein again. It should be noted that whether "the first terminal device initiates RRC connection resume" is the same as RRC connection resume in the conventional technology is not limited in this application.

"The first terminal device enters an RRC idle state" may include, may alternatively be, or may be understood as: The first terminal device performs an action of entering the RRC idle state, or the first terminal device performs an action after entering the RRC idle state.

For related content of "the first terminal device performs an action of entering the RRC idle state, or the first terminal device performs an action after entering the RRC idle state", refer to content in the section 5.3.11 (5.3.11 UE actions upon going to RRC_IDLE) of "NR; Radio Resource Control (RRC); Protocol specification" in 3GPP TS 38.331 . Details are not described herein again. It should be noted that whether "the first terminal device enters an RRC idle state" is the same as an action of a UE after entering the RRC idle state in the conventional technology.

Optionally, for step 303, this application further includes: A release cause is "other".

In a possible implementation, the first condition may include any one of a condition 1, a condition 2, or a condition 3.

Condition 1: The first paging message includes the identifier of the first multicast service, and the first paging message does not include the identifier of the first terminal device.

In this embodiment of this application, that the first paging message includes the identifier of the first multicast service may mean that an identifier of a multicast service carried in the first paging message matches the identifier of the first multicast service.

In this embodiment of this application, that the first paging message does not include the first identifier of the first terminal device may mean that identifiers of all terminal devices carried in the first paging message do not match the first identifier of the first terminal device.

Condition 2: The first paging message includes the identifier of the first multicast service and the first identifier of the first terminal device.

In this embodiment of this application, that the first paging message includes the first identifier of the first terminal device may mean that an identifier of a terminal device carried in the first paging message matches the first identifier of the first terminal device.

Condition 3: The first paging message includes the first identifier of the first terminal device, and the first paging message does not include the identifier of the first multicast service.

In this embodiment of this application, that the first paging message does not include the identifier of the first multicast service may mean that identifiers of all multicast services carried in the first paging message do not match the identifier of the first multicast service.

For example, when the first paging message includes the first identifier of the first terminal device but does not include the identifier of the first multicast service, it indicates that the network device pages the first terminal device due to the unicast. In this case, if an identifier of a terminal device included in the first paging message matches the first identifier of the first terminal device, it indicates that the paging is RAN paging, and the first terminal device may perform S302.

In this implementation, when the first paging message carries the identifier of the first service and does not carry the identifier of the terminal device, when the first paging message includes the identifier of the first multicast service and the first identifier, or when the first paging message carries only the first identifier, the first identifier is an identifier associated with the RAN paging. In this case, the terminal device may initiate RRC connection resume to attempt to enter the RRC connected state, so that entering the RRC connected state by the terminal device can be accelerated, and a delay of resuming the RRC connected state by the terminal device can be reduced.

In addition, when the first paging message includes the identifier of the first multicast service and the first identifier, it indicates that the network device pages the first terminal device due to the unicast and the multicast. In this case, the terminal device may initiate RRC connection resume to attempt to enter the RRC connected state. Therefore, a processing solution on a terminal device side is provided for a scenario in which the network device pages the first terminal device due to the unicast and the multicast, and the processing solution can accelerate entering the RRC connected state by the terminal device, and reduce the delay of resuming the RRC connected state by the terminal device.

In a possible implementation, the second condition may include a condition 4 or a condition 5.

Condition 4: The first paging message includes the identifier of the first multicast service and the second identifier of the first terminal device.

Condition 5: The first paging message includes the second identifier of the first terminal device.

For example, when the first paging message includes the identifier of the first terminal device, and the identifier of the first terminal device is the second identifier, it may indicate that the paging is CN paging, or the paging may be understood as paging initiated by a CN.

When the first paging message includes the second identifier of the first terminal device but does not include the identifier of the first multicast service, it indicates that the network device pages the first terminal device due to the unicast rather than the multicast. In this case, if an identifier of a terminal device included in the first paging message matches the second identifier of the first terminal device, it indicates that the paging is the CN paging, and the first terminal device may perform S303.

Because the first paging message includes the identifier of the first multicast service and the second identifier of the first terminal device, it indicates that the network device pages the first terminal device due to the unicast and the multicast. In this case, how to make a decision by the first terminal device becomes an urgent problem to be resolved, especially for a special scenario.

In a possible implementation, it is required that when the first paging message includes the identifier of the first multicast service, the first terminal device needs to initiate RRC connection resume after receiving the first paging message. When the first paging message includes the second identifier of the first terminal device, the first terminal device is required to enter the RRC idle state.

In the foregoing special scenario, because the first paging message includes the identifier of the first multicast service and the second identifier of the first terminal device, the first terminal device cannot respond to the first paging message.

However, the solution provided in embodiments of this application can further resolve the problem in the foregoing special scenario. In this embodiment of this application, when the first paging message includes the identifier of the first multicast service and the second identifier of the first terminal device, the first terminal device performs S303. Therefore, the problem that the first terminal device cannot respond to the first paging message can be resolved.

In another aspect, when the second condition is met, a terminal device in the RRC inactive state may enter the RRC connected state from the RRC idle state. For example, after the terminal device enters the RRC idle state, the terminal device may send a second message. The second message is used to request to set up an RRC connection. In this way, the terminal device in the RRC inactive state may select, based on content carried in the received first paging message, a manner of entering the RRC connected state. In addition, when the second condition is met, entering the RRC idle state may be better compatible with a manner of entering the RRC connected state by the terminal device in a unicast case. This reduces a delay of entering the RRC connected state by the terminal device in this case.

The identifier of the first multicast service is associated with the first multicast service.

For example, when the first terminal device determines that a multicast service identified by an identifier of a multicast service carried in the first paging message is a multicast service to which the first terminal device joins (for example, the first terminal device may subscribe to the multicast service), or when the first terminal device determines that a multicast service identified by an identifier of a multicast service carried in the first paging message is a service that the first terminal device is interested in and/or is receiving, the first terminal device may perform S302 (in still another possible implementation, the first terminal device may perform S303).

The first multicast service may include the multicast service to which the first terminal device joins. It may be understood that first multicast services may include one or more multicast services.

For example, the identifier of the multicast service may include any one or more of the following: a temporary mobile group identity (temporary mobile group identity, TMGI), an MBS service identifier (MBS service ID), a multicast service identifier, a wireless network temporary identifier (for example, a group radio network temporary identifier (group radio network temporary identifier, G-RNTI) and a G-CS-RNTI) used to schedule an MBS service or a multicast service, a multicast session identifier, an MBS session identifier (MBS session ID), a protocol data unit (protocol data unit, PDU) session ID used to transmit a multicast service, and the like.

It should be noted that the identifier of the first multicast service may include, may alternatively be, or may be understood as information about the first multicast service.

It should be noted that the multicast service may include, may alternatively be, or may be understood as a multicast session, an MBS session, or an MBS service.

It should be noted that the multicast may include, may alternatively be, or may be understood as the MBS, broadcast, or groupcast.

For example, identifiers of the first terminal device may include the first identifier of the first terminal device and the second identifier of the first terminal device.

For example, the first identifier of the first terminal device is associated with the RAN paging.

For example, when the first paging message includes the identifier of the first terminal device, and the identifier of the first terminal device is the first identifier, it may indicate that the paging is the RAN paging, or the paging may be understood as paging initiated by a RAN.

For example, a third message sent by a fifth network device to the first terminal device may include information about the first identifier of the first terminal device.

The information about the first identifier of the first terminal device may include some or all information about the first identifier of the first terminal device. For example, the information about the first identifier of the first terminal device may be some bits of the first identifier of the first terminal device, or all bits of the first identifier of the first terminal device.

The third message indicates or commands release of an RRC connection or suspension (for example, suspension) of the RRC connection.

For example, the third message may be an *RRCRelease* message.

For example, a fourth message sent by the first terminal device to a sixth network device may include the information about the first identifier of the first terminal device.

The fourth message requests to resume the suspended (for example, suspended) RRC connection or perform an RNA update.

For example, the fourth message may be an *RRCResumeRequest1* message.

It should be noted that any one or more of the fourth network device, the fifth network device, and the sixth network device may be a same network device, or may be different network devices.

For example, the fifth network device is an access network device.

For example, the sixth network device is an access network device.

For example, a size of the first identifier of the first terminal device may be 40 bits.

For example, the first identifier of the first terminal device is used to identify a suspended (for example, suspended) UE context of the first terminal device, or is used to identify the UE context of the first terminal device.

For example, the first identifier of the first terminal device may include any one or more of the following: a full I-RNTI, a full I-RNTI of the first terminal device, a full I-RNTI stored in the first terminal device, an I-RNTI (inactive RNTI), an I-RNTI of the first terminal device, and an I-RNTI stored in the first terminal device.

For example, the second identifier of the first terminal device is associated with the CN paging.

For example, the second identifier of the first terminal device may be provided or allocated by an upper layer (for example, a NAS layer of the first terminal device) of the first terminal device. Alternatively, the second identifier of the first terminal device may be provided or allocated by an upper layer (for example, a NAS layer of the first terminal device) of the first terminal device for/to the first terminal device (for example, an AS layer of the first terminal device).

For example, the second identifier of the first terminal device may be provided by a core network device for the first terminal device. It should be noted that the second identifier of the first terminal device may be sent by the core network device to the first terminal device, or may be sent by the core network device to the first terminal device by using the access network device. This is not limited in this application.

For example, the second identifier of the first terminal device may be used to identify (for example, uniquely identify) the first terminal device in a tracking area.

For example, a fifth message sent by the first terminal device to a seventh network device may include information about the second identifier of the first terminal device.

The information about the second identifier of the first terminal device may include some or all information about the second identifier of the first terminal device. For example, the information about the second identifier of the first terminal device may be some bits of the second identifier of the first terminal device, or all bits of the second identifier of the first terminal device.

The fifth message is used to request to set up an RRC connection.

For example, the fifth message may be an *RRCSetupRequest* message.

For example, a sixth message sent by the first terminal device to the seventh network device may include the information about the second identifier of the first terminal device.

The sixth message is used to confirm that RRC connection setup is successfully completed.

For example, the sixth message may be an *RRCSetupComplete* message.

For example, the second identifier of the first terminal device may include any one or more of the following: a 5G-S-TMSI (5G S-temporary mobile subscription identifier), a system architecture evolution temporary mobile station identifier (system architecture evolution temporary mobile station identifier, S-TMSI), an international mobile subscriber identity (international mobile subscriber identity, IMSI), and a ng-5G-S-TMSI.

For example, the condition 1 may include, may alternatively be, or may be understood as: The first paging message includes the identifier of the first multicast service, and the first paging message does not include the first identifier of the first terminal device and the second identifier of the first terminal device.

For example, the condition 2 may include, may alternatively be, or may be understood as: The first paging message includes the identifier of the first multicast service and the first identifier of the first terminal device, and the first paging message does not include the second identifier of the first terminal device.

For example, the condition 3 may include, may alternatively be, or may be understood as: The first paging message includes the first identifier of the first terminal device, and the first paging message does not include the identifier of the first multicast service and the second identifier of the first terminal device.

For example, the condition 4 may include, may alternatively be, or may be understood as: The first paging message includes the identifier of the first multicast service and the second identifier of the first terminal device, and the first paging message does not include the first identifier of the first terminal device.

For example, the condition 5 may include, may alternatively be, or may be understood as: The first paging message includes the second identifier of the first terminal device, and the first paging message does not include the identifier of the first multicast service and the first identifier of the first terminal device.

For example, "a first condition is met" may include, may alternatively be, or may be understood as: The third condition is not met, and the first paging message includes the identifier of the first multicast service.

The third condition includes: The first paging message includes the second identifier of the first terminal device.

For example, the third condition may include, may alternatively be, or may be understood as: The first paging message includes the second identifier of the first terminal device, and the first paging message does not include the first identifier of the first terminal device.

It should be noted that in this embodiment of this application, for "the first paging message includes the identifier of the first multicast service", the first paging message may further include an identifier of another multicast service, or the first paging message may not include an identifier of another multicast service. This is not limited in this application.

It should be noted that in this embodiment of this application, for "the first paging message does not include the identifier of the first multicast service", the first paging message may include an identifier of another multicast service, or the first paging message may not include an identifier of another multicast service. This is not limited in this application. In a possible case, "the first paging message does not include the identifier of the first multicast service" may include, may alternatively be, or may be understood as: The first paging message does not include the identifier of the multicast service, or the first paging message does not include an identifier of any multicast service.

It should be noted that in this embodiment of this application, for "the first paging message does not include the identifier of the first terminal device", the first paging message may include an identifier of another terminal device, or the first paging message may not include an identifier of another terminal device. This is not limited in this application. In a possible case, "the first paging message does not include the identifier of the first terminal device" may include, may alternatively be, or may be understood as: The first paging message does not include the identifier of the terminal device, or the first paging message does not include an identifier of any terminal device.

Optionally, after step S302, the first terminal device may perform the following step S304. Alternatively, optionally, "the first terminal device initiates RRC connection resume" may include: The first terminal device sends a first message.

S304: The first terminal device sends the first message.

For example, the first terminal device sends the first message to the network device.

The first message is used to request to resume the RRC connection.

For example, the first message may be an RRC message, for example, an *RRCResumeRequest* message or an *RRCResumeRequest1* message.

It should be noted that after initiating RRC connection resume, the first terminal device may send the first message, or may not send the first message. This is not limited in this application.

It should be noted that a sequence of step S302 and step S304 is not limited in this application.

For example, the first message may include the information about the first identifier of the first terminal device.

It should be noted that the first message and the fourth message are a same message, or may be different. This is not limited in this application.

Optionally, after step S303, the first terminal device may perform the following step S305. Alternatively, optionally, "the first terminal device enters an RRC idle state" may include: The first terminal device sends the second message

S305: The first terminal device sends the second message.

The second message is used to request to set up the RRC connection.

For example, the second message may be an RRC message, for example, the *RRCSetupRequest* message.

It should be noted that after entering the RRC idle state, the first terminal device may send the second message, or may not send the second message. This is not limited in this application.

It should be noted that a sequence of step S303 and step S305 is not limited in this application.

For example, the second message may include the information about the second identifier of the first terminal device.

Optionally, this application further includes: The first terminal device notifies the upper layer (for example, the upper layer is the NAS layer) of the first terminal device.

That the first terminal device notifies the upper layer of the first terminal device may include any one or more of the following:

If the first paging message includes the second identifier of the first terminal device, the first terminal device forwards the second identifier of the first terminal device included in the first paging message to the upper layer of the first terminal device;

if the first paging message includes an access type (*access type*), the first terminal device forwards the access type to the upper layer, and forwards the access type (if any) to the upper layer of the first terminal device; and
if the first paging message includes the identifier of the first multicast service, the first terminal device forwards the identifier of the first multicast service to the upper layer of the first terminal device.

Optionally, this application further includes: The first terminal device performs the following step S306.

S306: The first terminal device determines a first RRC connection resume cause.

It should be noted that step S306 may be performed before step S304. A sequence is not limited in this application. In this way, the first RRC connection resume cause may be carried in the first message for sending, or the first RRC connection resume cause and the first message are separately sent. In still another possible implementation, step S306 may alternatively be performed after S304. In this way, the first RRC connection resume cause and the first message are separately sent. In FIG. 3a, S306 is shown before S304.

That the first terminal device determines a first RRC connection resume cause may include, may alternatively be, or may be understood as: The first terminal device sets the first RRC connection resume cause.

For example, the first message may include the first RRC connection resume cause.

That the first terminal device determines a first RRC connection resume cause includes any one or more of a solution d1, a solution d2, a solution d3, and a solution d4.

Solution d1: The first terminal device determines the first RRC connection resume cause according to a first policy.

In a possible implementation, the first policy may include the first configuration information.

The first configuration information includes an RRC connection resume cause corresponding to unicast, an access identity (access identity, AI), or the access identity and the RRC connection resume cause corresponding to unicast.

In the solution d1, the access identity may include, may alternatively be, or may be understood as an access identity corresponding to unicast.

The access identity may alternatively be referred to as an access identifier

In another possible implementation, the first policy may include a rule for determining or setting an RRC connection resume cause corresponding to unicast.

In another possible implementation, the first policy may include the first configuration information and a rule for determining or setting an RRC connection resume cause corresponding to unicast.

For example, the first policy includes the RRC connection resume cause corresponding to unicast. The first terminal device may select, as the first RRC connection resume cause, one of RRC connection resume causes corresponding to unicast included in the first policy.

For another example, the first policy includes the access identity, or the first policy includes the access identity and the RRC connection resume cause corresponding to unicast. The first terminal device may determine one RRC connection resume cause as the first RRC connection resume cause based on the access identity included in the first policy.

For another example, the first policy includes the access identity, or the first policy includes the access identity and the RRC connection resume cause corresponding to unicast. The first terminal device may determine a target access identity based on the access identity included in the first policy, and then use, according to a correspondence between an access identity and an RRC connection resume cause, an RRC connection resume cause corresponding to the target access identity as the first RRC connection resume cause.

For another example, the first policy includes the rule for determining or setting an RRC connection resume cause corresponding to unicast, and the rule for determining or setting an RRC connection resume cause corresponding to unicast includes the correspondence between an access identity and an RRC connection resume cause. The first terminal device determines a target access identity, and then uses, according to a correspondence, included in the first policy, between an access identity and an RRC connection resume cause, an RRC connection resume cause corresponding to the target access identity as the first RRC connection resume cause.

The RRC connection resume cause corresponding to unicast may be understood as: The RRC connection resume cause corresponding to unicast is applicable to a case in which the first paging message includes the first identifier of the first terminal device but does not include the identifier of the first multicast service. To be specific, when the first paging message includes the first identifier of the first terminal device but does not include the identifier of the first multicast service, the first terminal device may alternatively determine the RRC connection resume cause based on the RRC connection resume cause corresponding to unicast, in other words, determine one of RRC connection resume causes corresponding to unicast as the RRC connection resume cause.

However, in this embodiment of this application, in a possible implementation, when the first paging message includes the first identifier of the first terminal device and the identifier of the first multicast service, the first terminal device may alternatively determine the RRC connection resume cause according to the first policy, in other words, determine one of RRC connection resume causes, included in the first policy, corresponding to unicast as the first RRC connection resume cause. It may also be understood that when the first paging message includes the identifier of the first multicast service and the first identifier of the first terminal device, the first terminal device may reuse or use the RRC connection resume cause corresponding to unicast to determine the first RRC connection resume cause.

The RRC connection resume cause corresponding to unicast may include any one or more of a multimedia priority service (multimedia priority service, MPS)-PriorityAccess (PriorityAccess), a mission critical service (mission critical service, MCS)-PriorityAccess, highPriorityAccess (highPriorityAccess), or mobile terminated (mobile terminated, MT)-Access.

Optionally, in a possible understanding, priorities of mps-PriorityAccess, mcs-PriorityAccess, highPriorityAccess, and mt-Access are in descending order.

In a possible implementation, the RRC connection resume cause corresponding to unicast may be specified in a protocol, or preconfigured or configured by the network device for the first terminal device.

In a possible implementation, in the solution d1, the first terminal device may determine the first RRC connection resume cause based on the access identity.

In a possible implementation, the access identity may be specified in a protocol, or preconfigured or configured by the network device for the first terminal device.

For example, the access identity may include, may alternatively be, or may be understood as an access identity configured by the upper layer of the first terminal device.

The upper layer of the first terminal device may include, may alternatively be, or may be understood as the NAS layer of the first terminal device.

"The first terminal device may determine the RRC connection resume cause based on the access identity" may include, may alternatively be, or may be understood as: The first terminal device (for example, the AS layer of the first terminal device) may determine the RRC connection resume cause based on the access identity configured by the upper layer of the first terminal device.

The rule for determining or setting an RRC connection resume cause corresponding to unicast may be understood as: The rule for determining or setting an RRC connection resume cause corresponding to unicast is applicable to the case in which the first paging message includes the first identifier of the first terminal device but does not include the identifier of the first multicast service. To be specific, when the first paging message includes the first identifier of the first terminal device but does not include the identifier of the first multicast service, the first terminal device may alternatively determine the RRC connection resume cause based on the rule for determining or setting an RRC connection resume cause corresponding to unicast.

However, in this embodiment of this application, in a possible implementation, when the first paging information includes the first identifier of the first terminal device and the identifier of the first multicast service, the first terminal device may alternatively determine the RRC connection resume cause according to the first policy. It may also be understood that when the first paging message includes the identifier of the first multicast service and the first identifier of the first terminal device, the first terminal device may reuse or use the rule for determining or setting an RRC connection resume cause corresponding to unicast to determine the first RRC connection resume cause.

It should be noted that the rule for determining or setting an RRC connection resume cause corresponding to unicast may be specified in a protocol, or preconfigured or configured by the network device for the first terminal device. A specific rule is not limited in this application.

In a possible implementation, that the first terminal device determines the first RRC connection resume cause according to the first policy may include any one or more of the following:

(1) if an access identity 1 is configured by the upper layer of the first terminal device, setting the first RRC connection resume cause to *mps-PriorityAccess*;
(2) if the access identity 1 is not configured by the upper layer of the first terminal device, and an access identity 2 is configured by the upper layer of the first terminal device, setting the first RRC connection resume cause to *mcs-PriorityAccess*;
(3) if the access identity 1 and the access identity 2 are not configured by the upper layer of the first terminal device, and one or more of an access identity 11 to an access identity 15 are configured by the upper layer of the first terminal device, setting the first RRC connection resume cause to *highPriorityAccess*; or
(4) if the access identity 1, the access identity 2, and the access identity 11 to the access identity 15 are not configured by the upper layer of the first terminal device, setting the first RRC connection resume cause to *mt-Access.*

In still another possible implementation, the first policy includes a plurality of RRC connection resume causes, and the first terminal device may select an RRC connection resume cause with a highest priority from the plurality of RRC connection resume causes as the RRC connection resume cause. For example, the plurality of RRC connection resume causes included in the first policy include mps-PriorityAccess and mps-PriorityAccess, where mps-PriorityAccess has the highest priority. When the first paging message includes the identifier of the first multicast service and the first identifier of the first terminal device, the first terminal device sets the RRC connection resume cause to *mps-PriorityAccess.*

In still another possible implementation, when the first paging message includes the identifier of the first multicast service and the first identifier of the first terminal device, the first terminal device sets the RRC connection resume cause to mt-Access, where mt-Access is an RRC connection resume cause in the first policy.

It should be noted that how to determine the first RRC connection resume cause according to the first policy is not limited in this application.

Solution d2: The first terminal device determines the first RRC connection resume cause according to a second policy.

In a possible implementation, the second policy may include second configuration information.

The second configuration information includes an RRC connection resume cause corresponding to multicast, an access identity (access identity, AI), or the access identity and the RRC connection resume cause corresponding to multicast.

In the solution d2, the access identity may include, may alternatively be, or may be understood as an access identity corresponding to multicast.

In another possible implementation, the second policy may include a rule for determining or setting an RRC connection resume cause corresponding to multicast.

In another possible implementation, the second policy may include the second configuration information and a rule for determining or setting an RRC connection resume cause corresponding to multicast.

For example, the second policy includes the RRC connection resume cause corresponding to multicast. The first terminal device may select, as the first RRC connection resume cause, one of RRC connection resume causes corresponding to multicast included in the second policy.

For another example, the second policy includes the access identity corresponding to multicast, or the second policy includes the access identity corresponding to multicast and the RRC connection resume cause corresponding to multicast. The first terminal device may determine one RRC connection resume cause as the first RRC connection resume cause based on the access identity included in the second policy.

For another example, the second policy includes the access identity corresponding to multicast, or the second policy includes the access identity corresponding to multicast and the RRC connection resume cause corresponding to multicast. The first terminal device may determine a target access identity based on the access identity included in the second policy, and then use, according to a correspondence between an access identity and an RRC connection resume cause, an RRC connection resume cause corresponding to the target access identity as the first RRC connection resume cause.

For another example, the second policy includes the rule for determining or setting an RRC connection resume cause corresponding to multicast, and the rule for determining or setting an RRC connection resume cause corresponding to multicast includes the correspondence between an access identity and an RRC connection resume cause. The first terminal device determines a target access identity, and then uses, according to a correspondence, included in the second policy, between an access identity and an RRC connection resume cause, an RRC connection resume cause corresponding to the target access identity as the first RRC connection resume cause.

In a possible implementation, the first terminal device may determine the RRC connection resume cause based on the access identity corresponding to multicast.

In a possible implementation, the access identity corresponding to multicast may be specified in a protocol, or preconfigured or configured by the network device for the first terminal device.

For example, the access identity corresponding to multicast may include, may alternatively be, or may be understood as an access identity corresponding to multicast configured by the upper layer of the first terminal device.

The upper layer of the first terminal device may include, may alternatively be, or may be understood as the NAS layer of the first terminal device.

"The first terminal device may determine the RRC connection resume cause based on the access identity corresponding to multicast" may include, may alternatively be, or may be understood as: The first terminal device (for example, the AS layer of the first terminal device) may determine the RRC connection resume cause based on the access identity corresponding to multicast configured by the upper layer of the first terminal device.

The rule for determining or setting an RRC connection resume cause corresponding to multicast may be understood as: The rule for determining or setting an RRC connection resume cause corresponding to multicast is applicable to a case in which the first paging information includes the identifier of the first multicast service but does not include the identifier of the first terminal device. To be specific, when the first paging information includes the identifier of the first multicast service but does not include the identifier of the first terminal device, the first terminal device may alternatively determine the RRC connection resume cause based on the rule for determining or setting an RRC connection resume cause corresponding to multicast.

However, in this embodiment of this application, in a possible implementation, when the first paging information includes the first identifier of the first terminal device and the identifier of the first multicast service, the first terminal device may alternatively determine the RRC connection resume cause according to the second policy. It may also be understood that when the first paging message includes the identifier of the first multicast service and the first identifier of the first terminal device, the first terminal device may reuse or use the rule for determining or setting an RRC connection resume cause corresponding to multicast to determine the first RRC connection resume cause.

It should be noted that the rule for determining or setting an RRC connection resume cause corresponding to multicast may be specified in a protocol, or preconfigured or configured by the network device for the first terminal device. A specific rule is not limited in this application.

The RRC connection resume cause corresponding to multicast may include any one or more of mps-Priority Access, mcs-PriorityAccess, highPriorityAccess, mt-Access, or MBS access (or multicast access).

For example, the RRC connection resume cause corresponding to multicast includes mt-Access. For example, when the first paging information includes the identifier of the first multicast service and the first identifier of the first terminal device, the first terminal device sets the first RRC connection resume cause to mt-Access.

Optionally, in a possible understanding, priorities of mps-PriorityAccess, mcs-PriorityAccess, highPriorityAccess, the multicast access, and mt-Access are in descending order.

In a possible implementation, the RRC connection resume cause corresponding to multicast may be specified in a protocol, or preconfigured or configured by the network device for the first terminal device.

In a possible implementation, that the first terminal device determines the first RRC connection resume cause according to the second policy may include any one or more of the following:

(1) if an access identity 1 is configured by the upper layer of the first terminal device, setting the first RRC connection resume cause to *mps-PriorityAccess*;

(2) if the access identity 1 is not configured by the upper layer of the first terminal device, and an access identity 2 is configured by the upper layer of the first terminal device, setting the first RRC connection resume cause to *mcs-PriorityAccess*;

(3) if the access identity 1 and the access identity 2 are not configured by the upper layer of the first terminal device, and one or more of an access identity 11 to an access identity 15 are configured by the upper layer of the first terminal device, setting the first RRC connection resume cause to *highPriorityAccess*; or

(4) if the access identity 1, the access identity 2, and the access identity 11 to the access identity 15 are not configured by the upper layer of the first terminal device, setting the first RRC connection resume cause to the multicast access.

In still another possible implementation, the second policy includes a plurality of RRC connection resume causes, and the first terminal device may select an RRC connection resume cause with a highest priority from the plurality of RRC connection resume causes as the RRC connection resume cause. For example, the plurality of RRC connection resume causes included in the second policy include mps-PriorityAccess and mps-PriorityAccess, where mps-Priority-Access has the highest priority. When the first paging message includes the identifier of the first multicast service and the first identifier of the first terminal device, the first terminal device sets the RRC connection resume cause to *mps-PriorityAccess.*

In still another possible implementation, when the first paging message includes the identifier of the first multicast service and the first identifier of the first terminal device, the first terminal device sets the RRC connection resume cause to mt-Access, where mt-Access is an RRC connection resume cause in the second policy.

In still another possible implementation, the second policy includes a plurality of RRC connection resume causes, and the first terminal device may select an RRC connection resume cause with a highest priority from the plurality of RRC connection resume causes as the RRC connection resume cause. For example, the plurality of RRC connection resume causes included in the second policy include mps-PriorityAccess and mps-PriorityAccess, where mps-Priority-Access has the highest priority. When the first paging message includes the identifier of the first multicast service and the first identifier of the first terminal device, the first terminal device sets the RRC connection resume cause to *mps-PriorityAccess.*

It should be noted that, in a possible implementation, the first policy and the second policy may be different.

It should be noted that the rule for determining or setting an RRC connection resume cause corresponding to unicast may be different from or the same as the rule for determining or setting an RRC connection resume cause corresponding to multicast. This is not limited in this application.

It should be noted that the RRC connection resume cause corresponding to unicast may be different from or the same as the RRC connection resume cause corresponding to multicast. This is not limited in this application.

It should be noted that the access identity may be different from or the same as the access identity corresponding to multicast. This is not limited in this application.

It should be noted that how to determine the first RRC connection resume cause according to the second policy is not limited in this application.

Solution d3: The first terminal device determines the first RRC connection resume cause according to a first policy and a second policy.

In a possible implementation, the first terminal device determines a second RRC connection resume cause according to the first policy. The first terminal device determines a third RRC connection resume cause according to the second policy. The first terminal device determines either the second RRC connection resume cause or the third RRC connection resume cause as the first RRC connection resume cause.

For example, the first terminal device may determine an RRC connection resume cause with a highest priority from the second RRC connection resume cause and the third RRC connection resume cause as the first RRC connection resume cause. It should be noted that how to select either the second RRC connection resume cause or the third RRC connection resume cause as the first RRC connection resume cause is not limited in this application.

For content related to "the first terminal device determines a second RRC connection resume cause according to the first policy", refer to content related to "the first terminal device determines the first RRC connection resume cause according to a first policy". Details are not described herein again.

For content related to "the first terminal device determines a third RRC connection resume cause according to the second policy", refer to content related to "the first terminal device determines the first RRC connection resume cause according to a second policy". Details are not described herein again.

It may be understood that, for the solution d3, one RRC connection resume cause needs to be determined based on the solution d1, another RRC connection resume cause also needs to be determined based on the solution d2, and then one of the two RRC connection resume causes is determined as the first RRC connection resume cause.

Solution d4: The first terminal device determines the first RRC connection resume cause according to a third policy.

In a possible implementation, the third policy may include third configuration information.

The third configuration information includes an RRC connection resume cause corresponding to unicast and multicast, an access identity, or the RRC connection resume cause corresponding to unicast and multicast and the access identity.

In the solution d4, the access identity may include, may alternatively be, or may be understood as an access identity corresponding to unicast and multicast.

In another possible implementation, the third policy may include a rule for determining or setting an RRC connection resume cause corresponding to unicast and multicast.

In another possible implementation, the first policy may include third configuration information and a rule for determining or setting an RRC connection resume cause corresponding to unicast and multicast.

For example, the third policy includes an RRC connection resume cause corresponding to unicast and multicast. The first terminal device may select, as the first RRC connection resume cause, one of RRC connection resume causes corresponding to unicast and multicast included in the third policy.

For another example, the third policy includes the access identity corresponding to unicast and multicast. The first terminal device may determine a target access identity based on the access identity included in the third policy, and then use, according to a correspondence between an access identity and an RRC connection resume cause, an RRC connection resume cause corresponding to the target access identity as the first RRC connection resume cause.

For another example, the third policy includes the rule for determining or setting an RRC connection resume cause corresponding to unicast and multicast, and the rule for determining or setting an RRC connection resume cause corresponding to unicast and multicast includes the correspondence between an access identity and an RRC connection resume cause. The first terminal device determines a target access identity, and then uses, according to a correspondence, included in the third policy, between an access identity and an RRC connection resume cause, an RRC connection resume cause corresponding to the target access identity as the first RRC connection resume cause.

The RRC connection resume cause corresponding to unicast and multicast may be understood as: The RRC connection resume cause corresponding to unicast and multicast is applicable to a case in which the first paging message includes the first identifier of the first terminal device and the identifier of the first multicast service. To be specific, when the first paging message includes the first identifier of the first terminal device and the identifier of the first multicast service, the first terminal device may alternatively determine the RRC connection resume cause based on the RRC connection resume cause corresponding to unicast and multicast, in other words, determine one of RRC connection resume causes corresponding to unicast and multicast as the RRC connection resume cause.

However, in this embodiment of this application, in a possible implementation, when the first paging information includes the first identifier of the first terminal device and the identifier of the first multicast service, the first terminal device may alternatively determine the RRC connection resume cause according to the third policy, in other words, determine one of the RRC connection resume causes corresponding to unicast and multicast included in the third policy as the first RRC connection resume cause.

The RRC connection resume cause corresponding to unicast and multicast may include any one or more of mps-PriorityAccess, mcs-PriorityAccess, highPriorityAccess, mt-Access, or unicast and multicast access.

Optionally, in a possible understanding, priorities of mps-PriorityAccess, mcs-PriorityAccess, highPriorityAccess, the unicast and multicast access, and mt-Access are in descending order.

In a possible implementation, the RRC connection resume cause corresponding to unicast and multicast may be specified in a protocol, or preconfigured or configured by the network device for the first terminal device.

In a possible implementation, in the solution d4, the first terminal device may determine the RRC connection resume cause based on the access identity.

In a possible implementation, the access identity may be specified in a protocol, or preconfigured or configured by the network device for the first terminal device.

For example, the access identity may include, may alternatively be, or may be understood as an access identity configured by the upper layer of the first terminal device.

The upper layer of the first terminal device may include, may alternatively be, or may be understood as the NAS layer of the first terminal device.

"The first terminal device may determine the RRC connection resume cause based on the access identity" may include, may alternatively be, or may be understood as: The first terminal device (for example, the AS layer of the first terminal device) may determine the RRC connection resume cause based on the access identity configured by the upper layer of the first terminal device.

The rule for determining or setting an RRC connection resume cause corresponding to unicast and multicast may be understood as: The rule for determining or setting an RRC connection resume cause corresponding to unicast and multicast is applicable to a case in which the first paging message includes the first identifier of the first terminal device and the identifier of the first multicast service. To be specific, when the first paging message includes the first identifier of the first terminal device and the identifier of the first multicast service, the first terminal device may alternatively determine the RRC connection resume cause based on the rule for determining or setting an RRC connection resume cause corresponding to unicast and multicast.

It should be noted that the rule for determining or setting an RRC connection resume cause corresponding to unicast and multicast may be specified in a protocol, or preconfigured or configured by the network device for the first terminal device. A specific rule is not limited in this application.

In a possible implementation, that the first terminal device determines the first RRC connection resume cause according to the third policy may include any one or more of the following:

(1) if an access identity 1 is configured by the upper layer of the first terminal device, setting the first RRC connection resume cause to *mps-PriorityAccess*;

(2) if the access identity 1 is not configured by the upper layer of the first terminal device, and an access identity 2 is configured by the upper layer of the first terminal device, setting the first RRC connection resume cause to *mcs-PriorityAccess*;

(3) if the access identity 1 and the access identity 2 are not configured by the upper layer of the first terminal device, and one or more of an access identity 11 to an access identity 15 are configured by the upper layer of the first terminal device, setting the first RRC connection resume cause to *highPriorityAccess*; or

(4) if the access identity 1, the access identity 2, and the access identity 11 to the access identity 15 are not configured by the upper layer of the first terminal device, setting the first RRC connection resume cause to the unicast and multicast access.

In still another possible implementation, the third policy includes a plurality of RRC connection resume causes, and the first terminal device may select an RRC connection resume cause with a highest priority from the plurality of RRC connection resume causes as the RRC connection resume cause. For example, the plurality of RRC connection resume causes included in the third policy include mps-PriorityAccess and mps-PriorityAccess, where mps-Priority Access has the highest priority. When the first paging message includes the identifier of the first multicast service and the first identifier of the first terminal device, the first terminal device sets the RRC connection resume cause to *mps-PriorityAccess.*

In still another possible implementation, when the first paging message includes the identifier of the first multicast service and the first identifier of the first terminal device, the first terminal device sets the RRC connection resume cause to the unicast and multicast access, where the unicast and multicast access is an RRC connection resume cause in the third policy.

In the solution d4, an RRC connection resume cause that is applicable when the first paging message includes the identifier of the first terminal device and the identifier of the first multicast service may be defined, added, or set.

It should be noted that, in a possible implementation, the third policy and the first policy may be different.

It should be noted that, in a possible implementation, the third policy and the second policy may be different.

It should be noted that the third configuration information may be different from or the same as the first configuration information or the second configuration information. This is not limited in this application. Whether it is different or the same is not limited in this application.

It should be noted that the rule for determining or setting an RRC connection resume cause corresponding to unicast and multicast may be different from or the same as the rule for determining or setting an RRC connection resume cause corresponding to unicast or the rule for determining or setting an RRC connection resume cause corresponding to multicast. This is not limited in this application. Whether it is different or the same is not limited in this application.

It should be noted that the RRC connection resume cause corresponding to unicast and multicast may be different from or the same as the RRC connection resume cause corresponding to unicast or the RRC connection resume cause corresponding to multicast. This is not limited in this application.

It should be noted that the access identity in the solution d4 may be different from or the same as the access identity in the solution d1 or the access identity corresponding to multicast in the solution d2. This is not limited in this application.

For one of the cases corresponding to the condition 1, the condition 2, and the condition 3, the first terminal device may perform one of the solution d1, the solution d2, the solution d3, or the solution d4.

Optionally, if the condition 1 is met, the first terminal device performs the solution d2.

Optionally, if the condition 2 is met, the first terminal device performs one of the solution d1, the solution d2, the solution d3, or the solution d4.

Optionally, if the condition 3 is met, the first terminal device performs the solution d1.

It should be noted that step S306 may alternatively be used as an independent embodiment, and does not depend on steps S302 to S305. For example, S301 and S306 may be used as separate embodiments.

It should be noted that in embodiments of this application, the foregoing content is described by using the first terminal device as an example. The first paging message may further include an identifier (a first identifier or a second identifier) of another terminal device, or may not include an identifier (a first identifier or a second identifier) of another terminal device. This is not limited in embodiments of this application. In embodiments of this application, the foregoing content is described by using the first multicast service as an example. The first paging message may further include identifiers of one or more other multicast services, or may not include an identifier of another multicast service. This is not limited in embodiments of this application.

Based on the foregoing content, FIG. 3b is an example of a schematic flowchart of still another possible communication method according to an embodiment of this application as shown in FIG. 3b.

As shown in FIG. 3b, the method includes the following steps.

S301A: A first terminal device receives a first paging message.

After step S301A, the first terminal device may perform the following step S302A or S303A.

For step S301A, refer to foregoing S301. Details are not described herein again.

S302A: The first terminal device initiates RRC connection resume. For step S302A, refer to foregoing S302. Details are not described herein again.

S303A: The first terminal device enters an RRC idle state. For step S303A, refer to foregoing S303. Details are not described herein again.

When a fourth condition is met, the first terminal device may perform step S302A.

When a fifth condition is met, the first terminal device may perform step S303A.

The fourth condition includes any one of a condition 1, a condition 2, a condition 3, and a condition 4.

The fifth condition includes a condition 5.

Optionally, after step S302A, the first terminal device may perform the following step S304A. Alternatively, optionally, "the first terminal device initiates RRC connection resume" may include: The first terminal device sends a first message. For related content of the first message, refer to the foregoing description. Details are not described again.

S304A: The first terminal device sends the first message.

For step S304A, refer to foregoing S304. Details are not described herein again.

Optionally, after step S303A, the first terminal device may perform the following step S305A. Alternatively, optionally, "the first terminal device enters an RRC idle state" may include: The first terminal device sends a second message. For related content of the second message, refer to the foregoing description. Details are not described again.

It should be noted that a sequence of step S302A and step S304A is not limited in this application.

S305A: The first terminal device sends the second message.

For step S305A, refer to foregoing S305. Details are not described herein again.

It should be noted that a sequence of step S303A and step S305A is not limited in this application.

Optionally, this application further includes: The first terminal device performs the following step S306A.

S306A: The first terminal device determines a first RRC connection resume cause.

For step S306A, refer to foregoing S306. Details are not described herein again.

In a possible implementation, the first RRC connection resume cause may be carried in the first message. In this case, S306A may be performed before S304A (FIG. 3b is shown by using this example).

Optionally, if the condition 1 is met, the first terminal device performs a solution d2.

Optionally, if the condition 2 or the condition 4 is met, the first terminal device performs one of a solution d1, the solution d2, a solution d3, or a solution d4.

Optionally, if the condition 3 is met, the first terminal device performs the solution d1.

It should be noted that step S306A may alternatively be used as an independent embodiment, and does not depend on steps S302A to S305A. For example, S301A and S306A may be used as separate embodiments.

It should be noted that a sequence of the steps in S302A to S304A may be consistent with or may be different from that shown in FIG. 3b. For example, S306A may be performed before S302A and S304A. A sequence is not limited in this application.

It should be noted that, for content or explanation of the method in FIG. 3b, refer to the description of the method in FIG. 3a. Details are not described herein again.

Based on the solution shown in FIG. 3b, after receiving the first paging message, the first terminal device may attempt to enter an RRC connected state in different manners under different conditions, so that a delay of entering the RRC connected state by the first terminal device can be reduced. For example, when the first paging message includes the identifier of the first multicast service and a second identifier of the first terminal device (condition 4), if the first terminal device initiates RRC connection resume after receiving the first paging message, and if the network device can obtain, confirm, or verify a UE context of the first terminal device, the first terminal device may enter the RRC connected state. In comparison with the first terminal device entering the RRC idle state after receiving the first paging message and attempting to enter the RRC connected state through RRC connection setup, the first terminal device can enter the connected state more quickly by initiating RRC connection resume after receiving the first paging message

To describe embodiments of this application in a more specific manner, the following describes several specific examples based on FIG. 3a and the foregoing solution for determining the first RRC connection resume cause.

Example 1: The first terminal device receives a first paging message from a fourth network device, where the first paging message includes the identifier of the first multicast service and a full I-RNTI of the first terminal device. The first terminal device initiates RRC connection resume, and selects the first RRC connection resume cause as multicast access (in actual application, another connection resume cause may be selected based on the foregoing content). The first terminal device sends an RRC connection resume request, and adds, to the RRC connection resume request, indication information indicating that the first RRC connection resume cause is the multicast access.

Example 2: The first terminal device receives a first paging message from a fourth network device, where the first paging message includes the identifier of the first multicast service and a 5G-S-TMSI of the first terminal device. The first terminal device enters the RRC idle state, and sends an RRC connection setup request to request to set up an RRC connection.

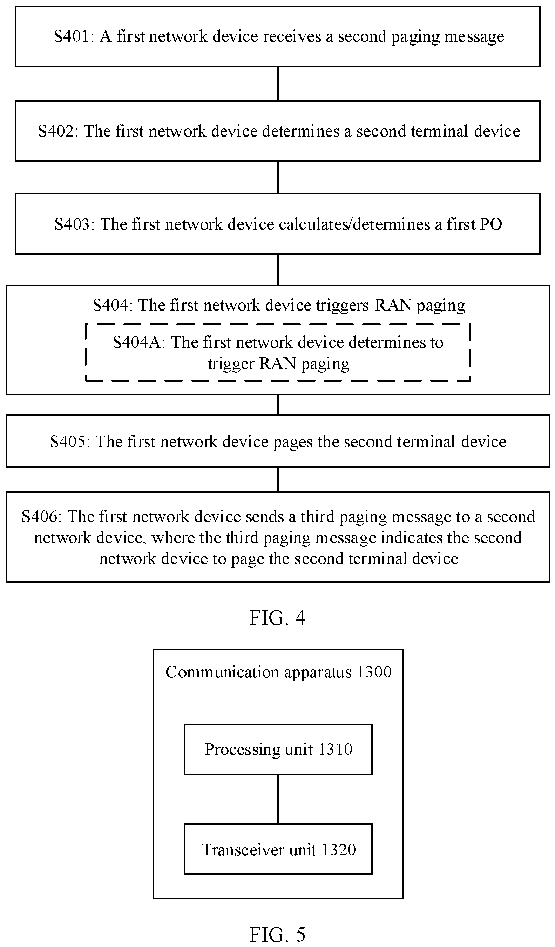

Based on the foregoing content, FIG. 4 is an example of a schematic flowchart of another communication method according to an embodiment of this application. The communication method shown in FIG. 4 may be applicable to the system architecture shown in FIG. 1 and/or FIG. 2. For example, a solution executed on a terminal device side (for example, a second terminal device or a third terminal device) in FIG. 4 may be executed by the terminal device 11 in FIG. 1, may alternatively be executed by a module or a chip of the terminal device 11, may alternatively be executed by the terminal device (for example, the terminal device 111, the terminal device 112, or the terminal device 113) in FIG. 2, or may alternatively be executed by a module or a chip of the terminal device (for example, the terminal device 111, the terminal device 112, or the terminal device 113) in FIG. 2.

For another example, a solution executed by a first network device or a second network device in FIG. 4 may be executed by the network device 12 in FIG. 1, may alternatively be executed by a module or a chip of the network device 12, may alternatively be executed by the access network device (for example, the access network device 121 or the access network device 122) in FIG. 2, or may alternatively be executed by a module or a chip of the access network device (for example, the access network device 121 or the access network device 122) in FIG. 2.

For another example, a solution executed by a third network device in FIG. 4 may be executed by the network device 12 in FIG. 1, may alternatively be executed by a module or a chip of the network device 12, may alternatively be executed by the core network device (for example, the core network device 123 or the core network device 124) in FIG. 2, or may alternatively be executed by a module or a chip of the core network device (for example, the core network device 123 or the core network device 124) in FIG. 2.

The solution provided in FIG. 4 may alternatively be performed in combination with the solution in FIG. 3a or FIG. 3b.

For example, the first terminal device in FIG. 3a or FIG. 3b may be the second terminal device in FIG. 4. The fourth network device in FIG. 3a or FIG. 3b may be the first network device in FIG. 4. In the solutions shown in FIG. 3a and FIG. 3b, the first paging message received by the terminal device in S301 may be a fourth paging message sent by the first network device in FIG. 4. The identifier of the first multicast service carried in the first paging message may be a third identifier or a fourth identifier of a second multicast service carried in the fourth paging message

For another example, the first terminal device in FIG. 3a or FIG. 3b may be the second terminal device in FIG. 4. The fourth network device in FIG. 3a or FIG. 3b may be the second network device in FIG. 4. In the solutions shown in FIG. 3a and FIG. 3b, the first paging message received by the terminal device in S301 may be a paging message that is sent by the second network device in FIG. 4 and that is used to page the second terminal device. The identifier of the first multicast service carried in the first paging message may be an identifier of a second multicast service carried in the paging message that is sent by the second network device and that is used to page the second terminal device.

For another example, the first terminal device in FIG. 3a or FIG. 3b may be the third terminal device in FIG. 4. The fourth network device in FIG. 3a or FIG. 3b may be the first network device in FIG. 4. In the solutions shown in FIG. 3a and FIG. 3b, the first paging message received by the terminal device in S301 may be a paging message that is sent by the first network device in FIG. 4 and that is used to page the third terminal device. The identifier of the first multicast service carried in the first paging message may be a third identifier of a second multicast service.

The solution provided in FIG. 4 and the solution in FIG. 3a may be separately performed. The solution provided in FIG. 4 and the solution in FIG. 3b may be separately performed. To be specific, the first paging message received by the terminal device in S301 in FIG. 3a may alternatively be another paging message other than the fourth paging message. For example, in S301, the terminal device may receive a paging message sent by another network device (a network device other than the first network device and the second network device).

Before the solution in FIG. 4 is described, paging by an access network device in embodiments of this application is first described. For ease of understanding, in some parts of embodiments of this application, access network paging is referred to as RAN paging.

Currently, events that trigger the access network device to initiate RAN paging for a terminal device in an RRC inactive state may include the following event el, event e2, and event e3. In other words, when any one of the following event el, event e2, or event e3 is met, a last serving access network device (for example, a serving gNB) of the terminal device pages the terminal device in a cell corresponding to an RNA, or sends a paging message (for example, XnAP RAN paging) to a neighboring access network device (if the RNA includes the neighboring access network device).

Event e1: If the last serving access network device receives downlink data for the terminal device from a core network device (for example, a UPF), or receives downlink UE-related signaling (other than a terminal device Context Release Command (UE Context Release Command) message) from a core network device (for example, an AMF).

Event e2: If the last serving access network device receives a terminal device Context Release Command (UE Context Release Command) message.

Event e3: If the last serving access network device receives an NG RESET message.

Currently, multicast paging has the following problems.

After the first network device (access network device) receives a second paging message from the third network device (core network device), the second paging message includes a third identifier of a multicast service. According to the conventional technology, the first network device pages a terminal device that corresponds to the multicast service and that is in an RRC idle state. After the terminal device in the RRC idle state enters an RRC connected state, the core network device sends data of the multicast service to the first network device. The first network device triggers RAN paging only after receiving the data of the multicast service, and the first network device pages the terminal device in the RRC inactive state, so that the terminal device in the RRC inactive state enters the connected state.

It can be learned from the foregoing application scenario that, after the terminal device in the RRC idle state enters the RRC connected state and the first network device receives the data of the multicast service from the core network device, paging is initiated for the terminal device in the RRC inactive state. Consequently, the terminal device in the RRC inactive state enters the connected state late (in other words, the terminal device in the RRC inactive state associated with the multicast service enters the connected state later than the terminal device in the RRC idle state). A cause for this problem is that the core network device does not sense the terminal device in the RRC inactive state. Therefore, the second paging message initiated by the core network is intended to page the terminal device in the RRC idle state. However, the first network device triggers the first network device to page the terminal device in the RRC inactive state only when the foregoing scenario e1 (downlink data is received) is met. The solution provided in FIG. 4 in embodiments of this application can resolve this problem, so that the terminal device associated with the multicast service in the RRC inactive state enters the RRC connected state earlier. Detailed description is provided below with reference to the accompanying drawings.

As shown in FIG. 4, the method includes the following steps.

S401: The first network device receives the second paging message.

In S401, the first network device may receive the second paging message from the third network device.

For example, the third network device may be the core network device. For example, the third network device is the AMF.

For example, the first network device may be the access network device.

For example, the first network device is a network device that supports an MBS or multicast.

"Supporting an MBS or multicast" may include, be understood as, or be replaced with having an MBS or multicast function.

The second paging message is associated with the multicast.

In a possible implementation, the second paging message is used to notify that the second multicast service is activated, is used to notify that a second multicast session is activated, indicates the first network device to page a terminal device related to the second multicast service, or indicates the first network device to page the third terminal device related to the second multicast service.

In a possible implementation, after receiving the second paging information, the first network device pages the terminal device related to the second multicast service, or the first network device pages the third terminal device.

For example, the second paging message includes a third identifier of the second multicast service.

The third identifier of the second multicast service is associated with the second multicast service.

For example, the identifier of the multicast service or the third identifier of the second multicast service may include any one or more of the following: a TMGI, an MBS service identifier, a multicast service identifier, an MBS session identifier, a PDU session ID used to transmit a multicast service, and the like.

It should be noted that the third identifier of the second multicast service may include, may alternatively be, or may be understood as information about the second multicast service or third information of the second multicast service.

It should be noted that the multicast service may include, may alternatively be, or may be understood as a multicast session, an MBS session, or an MBS service.

It should be noted that the multicast may include, may alternatively be, or may be understood as the MBS, broadcast, or groupcast.

It should be noted that the second paging message may include information about one or more multicast services. This is not limited in this application. The second multicast service is used as an example for description in this application.

Optionally, the second paging message may further include an identifier of the third terminal device, or an identifier of the third terminal device and a DRX configuration of the third terminal device.

The third terminal device is associated with the second multicast service.

The third terminal device is in the RRC idle state.

It should be noted that the identifier of the third terminal device may include, may alternatively be, or may be understood as information about the third terminal device.

It should be noted that the third terminal device may include one or more terminal devices. This is not limited in this application.

For example, the identifier of the third terminal device may be a second identifier of the third terminal device.

For example, the second identifier of the third terminal device is associated with CN paging.

For example, the second identifier of the third terminal device may be provided or allocated by an upper layer (for example, a NAS layer of the third terminal device) of the third terminal device. Alternatively, the second identifier of the third terminal device may be provided or allocated by an upper layer (for example, a NAS layer of the third terminal device) of the third terminal device for/to the third terminal device (for example, an AS layer of the third terminal device).

For example, the second identifier of the third terminal device may be provided by the core network device (for example, the third network device) for the third terminal device. It should be noted that the second identifier of the third terminal device may be sent by the core network device to the third terminal device, or may be sent by the core network device to the third terminal device by using the access network device. This is not limited in this application.

For example, the second identifier of the third terminal device may be used to identify (for example, uniquely identify) the third terminal device in a tracking area.

For example, the second identifier of the third terminal device may include any one or more of the following: a 5G-S-TMSI, an S-TMSI, an IMSI, and a ng-5G-S-TMSI.

It should be noted that the second identifier of the third terminal device may include, may alternatively be, or may be understood as the information about the third terminal device or second information of the third terminal device.

For example, the DRX configuration of the third terminal device may include a first DRX cycle of the third terminal device.

In a possible case, the first DRX cycle of the third terminal device is negotiated by the third terminal device and the core network (for example, the third network device). Alternatively, the first DRX cycle of the third terminal device is configured or acknowledged by the core network (for example, the third network device) for the third terminal device.

For example, the first DRX cycle of the third terminal device is a DRX cycle specific to the third terminal device.

After step S401, the first network device may perform any one or more of steps S402, S403, S404, S404A, S405, and S406.

S402: The first network device determines the second terminal device.

The second terminal device is associated with the second multicast service. For example, the second terminal device includes a terminal device that joins the second multicast service.

For example, the second terminal device is in the RRC inactive state.

It should be noted that, that the second terminal device is in the RRC inactive state includes: The first network device determines, considers, or regards that the second terminal device is in the RRC inactive state. It may be understood that status misalignment may occur between the terminal device and the network device. Therefore, that the second terminal device needs to be in the RRC inactive state is not limited in this application.

For example, the second terminal device includes a terminal device that joins the second multicast service and that is in the RRC inactive state.

It should be noted that the second terminal device may include one or more terminal devices.

Optionally, that the first network device determines the second terminal device may include: The first network device determines whether the second terminal device exists.

In S402, the first network device may determine the second terminal device based on the third identifier of the second multicast service.

S402 may be an optional step, but is not mandatory.

"The first network device determines the second terminal device" may include any one or more of the following:

(1) the first network device determines an identifier of the second terminal device; and
(2) the first network device determines a first DRX cycle of the second terminal device and/or a second DRX cycle of the second terminal device.

For example, the identifier of the second terminal device may include a first identifier of the second terminal device and/or a second identifier of the second terminal device.

For example, the first identifier of the second terminal device is associated with the RAN paging.

For example, a seventh message sent by the network device (for example, the first network device) to the second terminal device may include information (partial or all information) about the first identifier of the second terminal device.

The seventh message indicates or commands release of an RRC connection or suspension (for example, suspension) of the RRC connection.

For example, the seventh message may be an *RRCRelease* message.

For example, an eighth message sent by the second terminal device to the network device (for example, the first network device or another network device) may include the information (partial or all information) about the first identifier of the second terminal device.

The eighth message requests to resume the suspended (for example, suspended) RRC connection or perform an RNA update.

For example, the eighth message may be an *RRCResumeRequest1* message.

For example, a size of the first identifier of the second terminal device may be 40 bits.

For example, the first identifier of the second terminal device is used to identify a suspended (for example, suspended) UE context of the second terminal device, or is used to identify the UE context of the second terminal device.

For example, the first identifier of the second terminal device may include any one or more of the following: a full I-RNTI, a full I-RNTI of the second terminal device, a full I-RNTI stored in the second terminal device, an I-RNTI (inactive RNTI), an I-RNTI of the second terminal device, and an I-RNTI stored in the second terminal device.

For example, the second identifier of the second terminal device is associated with the CN paging.

For example, the second identifier of the second terminal device may be provided or allocated by an upper layer (for example, a NAS layer of the second terminal device) of the second terminal device. Alternatively, the second identifier of the second terminal device may be provided or allocated by an upper layer (for example, a NAS layer of the second terminal device) of the second terminal device for/to the second terminal device (for example, an AS layer of the second terminal device).

For example, the second identifier of the second terminal device may be provided by the core network device (for example, the third network device) for the second terminal device. It should be noted that the second identifier of the second terminal device may be sent by the core network device to the second terminal device, or may be sent by the core network device to the second terminal device by using the access network device. This is not limited in this application.

For example, the second identifier of the second terminal device may be used to identify (for example, uniquely identify) the second terminal device in a tracking area.

For example, a second identifier of a terminal device or the second identifier of the second terminal device may include any one or more of the following: a 5G-S-TMSI, an S-TMSI, an IMSI, and a ng-5G-S-TMSI.

In a possible case, the first DRX cycle of the second terminal device is negotiated by the second terminal device and the core network (for example, the third network device). Alternatively, the first DRX cycle of the second terminal device is configured or acknowledged by the core network (for example, the third network device) for the second terminal device.

For example, the first DRX cycle of the second terminal device is a DRX cycle specific to the second terminal device.

In a possible case, the second DRX cycle of the second terminal device is sent by the network device (for example, the first network device) to the second terminal device. For example, a ninth message sent by the network device (for example, the first network device) to the second terminal device includes the second DRX cycle of the second terminal device.

The ninth message indicates or commands release of an RRC connection or suspension (for example, suspension) of the RRC connection.

For example, the ninth message may be an *RRCRelease* message.

It should be noted that the seventh message and the ninth message may be a same message, or may be different messages. This is not limited in this application.

Optionally, the first network device may be a last serving network device of the second terminal device. For example, the last serving network device may include a last serving gNB.

S403: The first network device calculates or determines a first paging occasion (paging occasion, PO).

The first PO is associated with the second terminal device.

That the first network device calculates or determines the first paging occasion (paging occasion, PO) includes: The first network device calculates or determines an index of the first paging occasion.

In a possible implementation, the first PO may be calculated or determined based on any one or more of the following:

    (1) the second identifier of the second terminal device;
    (2) the DRX cycle of the second terminal device;
    (3) a quantity of PFs in the DRX cycle of the second terminal device; and
    (4) a quantity of POs in the PF.

The DRX cycle of the second terminal device may be a smallest value in a first DRX cycle set.

The first DRX cycle set includes any one or more of the first DRX cycle of the second terminal device, the second DRX cycle of the second terminal device, and a default DRX cycle.

The default DRX cycle may be broadcast by the first network device. For example, the default DRX cycle is included in system information (for example, a SIB 1) sent by the first network device.

It should be noted that the DRX cycle of the second terminal device determined by the first network device may be different from the DRX cycle of the second terminal device determined by the second terminal device. This is not limited in this application.

It should be noted that the first PO may include a plurality of POs.

Optionally, step 403 further includes: The first network device calculates or determines a first PF.

The first PF is associated with the second terminal device. In a possible implementation, the first PF may be calculated or determined based on any one or more of the following:

    (1) the second identifier of the second terminal device;
    (2) the DRX cycle of the second terminal device;
    (3) the quantity of PFs in the DRX cycle of the second terminal device; and
    (4) an offset value used to determine the PF.

It should be noted that the first PF may include a plurality of PFs.

It should be noted that a method for "calculating or determining a first PO" in this application may be the same as or different from that in the conventional technology (for details, refer to descriptions in the conventional technology). This is not limited in this application.

It should be noted that a method for "calculating or determining a first PF" in this application may be the same as or different from that in the conventional technology (for details, refer to descriptions in the conventional technology). This is not limited in this application.

It should be noted that, in a possible implementation, when a PO of the third terminal device includes a PO of the second terminal device (for example, overlapping exists), paging (for example, DCI of a paging message) may be sent on the PO (for example, the overlapping PO) of the third terminal device.

It should be noted that, in a possible implementation, when a PO of the second terminal device and a PO of the third terminal device do not overlap, paging (for example, DCI of a paging message) needs to be separately sent on the PO of the second terminal device and the PO of the third terminal device.

S403 may be an optional step, but is not mandatory.

S404: The first network device triggers RAN paging.

For example, that the first network device triggers RAN paging includes: The first network device triggers RAN paging for the second terminal device and/or for the second multicast service.

Optionally, this application further includes: The first network device triggers RAN paging when a sixth condition is met.

The sixth condition includes: The first network device determines that the second terminal device exists.

Optionally, that the first network device triggers RAN paging may include, may alternatively be, or may be understood as: The first network device determines to initiate RAN paging. In FIG. 4, S404A is indicated as a dashed line, and is marked in a step block of S404, to indicate that S404 may include, may alternatively be, or may be understood as S404A.

S404A: The first network device determines to trigger the RAN paging.

It may be understood that RAN paging is triggered when a first event is met.

The first event includes: The first network device receives the second paging message.

In this application, the event may include, may alternatively be, or may be understood as a cause or a condition.

Optionally, RAN paging is triggered when the first event is met and the sixth condition is met.

The first event includes: The first network device receives the second paging message, where the second paging message includes the third identifier of the second multicast service.

In this application, the event may include, may alternatively be, or may be understood as a cause or a condition.

Optionally, this application further includes: triggering RAN paging when the first event is met and the sixth condition is met.

For example, the solution provided in S402A in this embodiment of this application may be understood as adding an event e4. The event e4 includes: The first network device receives the second paging message from the third network device, where the second paging message includes the third identifier of the second multicast service.

For example, the solution provided in S402A in this embodiment of this application may be understood as adding an event e5. The event e5 includes: The first network device receives the second paging message from the third network device, where the second paging message includes the third identifier of the second multicast service, and the second terminal device exists. Alternatively, the solution provided in S402A in this embodiment of this application may be understood as adding an event e5. The event e5 includes: The first network device receives the second paging message from the third network device, where the second paging message includes the third identifier of the second multicast service, and the first network device determines that the second terminal device exists.

In a possible implementation, when the scenario e4 is met, the first network device is triggered to initiate RAN paging on the second terminal device in the RRC inactive state.

In still another possible implementation, in S402, when the scenario e4 is met, a last serving access network device (for example, a serving gNB) of the second terminal device pages the second terminal device in a cell corresponding to an RNA configured for the second terminal device, or sends a paging message (for example, XnAP RAN paging) to a neighboring access network device (if the RNA includes the neighboring access network device).

S405: The first network device pages the second terminal device.

In a possible implementation, the first network device may page the second terminal device in the cell corresponding to the RNA.

In a possible implementation, that the first network device pages the second terminal device includes: The first network device may send first control information and the fourth paging message. The first control information is used to schedule the fourth paging message, or the first control information includes scheduling information of the fourth paging message.

For example, the first network device sends the first control information on the first paging occasion, and sends the fourth paging message on a resource indicated by the first control information.

For another example, the first network device sends the first control information on the first paging occasion in the cell corresponding to the RNA corresponding to the second terminal device.

The fourth paging message includes the third identifier of the second multicast service and/or the identifier of the second terminal device (for example, the first identifier of the second terminal device or the second identifier of the second terminal device). Alternatively, the fourth paging message includes a fourth identifier of the second multicast service and/or the identifier of the second terminal device (for example, the first identifier of the second terminal device or the second identifier of the second terminal device).

For example, the fourth paging message is used to notify that the second multicast service is activated, is used to notify that the second multicast session is activated, or is used to page the second terminal device.

The fourth identifier of the second multicast service is associated with the second multicast service.

For example, the identifier of the multicast service or the fourth identifier of the second multicast service may include any one or more of the following: a TMGI, an MBS service identifier, and a wireless network temporary identifier (for example, a G-RNTI and a G-CS-RNTI) used to schedule an MBS service or a multicast service, a multicast service identifier, an MBS session identifier, a PDU session ID used to transmit a multicast service, and the like.

It should be noted that the fourth identifier of the second multicast service may include, may alternatively be, or may be understood as the information about the second multicast service or fourth information of the second multicast service.

It should be noted that the third identifier of the second multicast service may be the same as or different from the fourth identifier of the second multicast service. This is not limited in this application.

For example, the first control information may be sent on a physical downlink control channel (physical downlink control channel, PDCCH). For example, the first control information is first DCI.

For example, the fourth paging message may be sent on a physical downlink shared channel (physical downlink shared channel, PDSCH).

In a possible implementation, the first DCI may include a short message service indication field (short message service indicator). The short message service indication field indicates whether the first DCI includes scheduling information of the fourth paging message, indicates whether the PDSCH (for example, the fourth paging message) is scheduled by the first DCI, or indicates whether a short message service (short message service) is included. When the short message service indication field indicates that the first DCI schedules the fourth paging message, the second terminal device receives the fourth paging message based on the first control information.

S406: The first network device sends a third paging message to the second network device, where the third paging message indicates the second network device to page the second terminal device.

The RNA corresponding to the second terminal device includes the second network device, or the RNA includes the second network device.

The second network device is a network device that supports or does not support an MBS or multicast. This is not limited in this application.

The third paging message includes one of the following:

(a) the identifier of the second terminal device;
(b) the identifier of the second terminal device and a DRX cycle of the second terminal device;
(c) the identifier of the second terminal device, the DRX cycle of the second terminal device, and the identifier of the second multicast service; or
(d) the identifier of the second multicast service.

The identifier of the second multicast service may include the third identifier of the second multicast service, the fourth identifier of the second multicast service, or a fifth identifier of the second multicast service.

For example, the identifier of the second terminal device may include the first identifier of the second terminal device and/or the second identifier of the second terminal device.

The fifth identifier of the second multicast service is associated with the second multicast service.

For example, the identifier of the multicast service or the fifth identifier of the second multicast service may include any one or more of the following: a temporary mobile group identity (temporary mobile group identity, TMGI), an MBS service identifier (MBS service ID), a multicast service identifier, an MBS session identifier (MBS session ID), a protocol data unit (protocol data unit, PDU) session ID used to transmit a multicast service, and the like.

It should be noted that the fifth identifier of the second multicast service may include, may alternatively be, or may be understood as the information about the second multicast service or fifth information of the second multicast service.

It should be noted that the fifth identifier of the second multicast service may be the same as or different from the third identifier of the second multicast service or the fourth identifier of the second multicast service. This is not limited in this application.

In a possible implementation, the second paging message is used to notify that the second multicast service is activated, is used to notify that the second multicast session is activated, indicates the second network device to page a terminal device related to the second multicast service, indicates the second network device to page the second terminal device related to the second multicast service, or indicates the second network device to page the second terminal device.

In a possible implementation, after receiving third paging information, the second network device pages the terminal device related to the second multicast service, or the second network device pages the second terminal device.

In an optional implementation, the second network device is the network device that supports the MBS or multicast, and the third paging message includes any one of (a), (b), (c), and (d).

In another optional implementation, the second network device is the network device that does not support the MBS or multicast, and the third paging message includes any one of (a) and (b).

It may be understood that the second network device may initiate paging on the second terminal device based on the third paging message and by using content carried in the third paging message.

Optionally, the third paging message may further include one or more of the following content: a paging priority, auxiliary information, a radio capability of the second terminal device, or the like.

S402, S403, S404A, S404, S405, and S406 may be performed separately, or may be performed in combination. This is not limited in this application.

For example, the first network device may perform S405 and S406. In this case, the first network device may page the first terminal device, or may indicate the second network device to page the first terminal device.

For another example, the first network device may perform S404 and S405. In this case, the first network device may trigger RAN paging, and page the first terminal device.

For another example, the first network device may perform S404 and S406. In this case, the first network device may trigger RAN paging, and indicate the second network device to page the first terminal device.

For another example, the first network device may perform S404, S405, and S406. In this case, the first network device may trigger RAN paging, page the first terminal device, and indicate the second network device to page the first terminal device.

It should be noted that FIG. 4 shows only a possible execution sequence of method steps, and there may be other sequences between the steps in FIG. 4. This is not limited in this application. For example, S402 and S403 may be performed after S404. For another example, S406 may be performed before S405.

In a possible implementation, in embodiments of this application, the second paging message may include the third identifier of the second multicast service, but does not include the identifier of the second terminal device (for example, does not include the second identifier and the first identifier of the second terminal device).

In still another possible implementation, the second paging message includes the third identifier of the second multicast service and an identifier of another terminal device associated with the second multicast service (for example, includes the second identifier of the third terminal device). However, it should be noted that the identifier that is included in the second paging message and that is of the another terminal device associated with the second multicast service is an identifier of a terminal device that is associated with the second multicast service and that is in the RRC idle state, and an identifier of a terminal device that is associated with the second multicast service and that is in the RRC inactive state is not included in the second paging message. Because the RRC inactive state is not sensed by the core network device, the core network device cannot distinguish the terminal device in the RRC inactive state from the terminal device in the RRC connected state.

However, in embodiments of this application, after receiving the second paging message, the first network device may calculate the paging occasion of the third terminal device in the RRC idle state, or may calculate the paging occasion of the second terminal device in the RRC inactive state; and before receiving data of the second multicast service, initiate paging to the third terminal device in the RRC idle state and the second terminal device in the RRC inactive state. In comparison with a solution in which paging is initiated to the second terminal device in the RRC inactive state after the data of the second multicast service is received, in this implementation, after the multicast session is activated, a delay of entering the RRC connected state by the second terminal device in the RRC inactive state can be reduced.

In a possible implementation, for the identifier of the third terminal device carried in the second paging message, the first paging message may further carry identifiers and/or DRX cycles of one or more tracking areas (tracking areas, TA) corresponding to the third terminal device. After receiving the first paging message, the first network device may page the third terminal device in the one or more tracking areas indicated in the first paging message. For each cell in the tracking area, an access network node may generate paging for one time on a radio air interface. The first paging message may further include a DRX cycle for an NG-RAN to use. The DRX configuration may be negotiated by the third terminal device with the core network device side by using a NAS message before the core network device sends the DRX configuration to the access network device.

It should be noted that in embodiments of this application, after receiving the paging message, the second terminal device in the RRC inactive state may initiate RRC connection resume in the RRC inactive state, or enter the RRC idle state. The solution shown in FIG. 4 imposes no limitation on the solution of the second terminal device. In other words, in the solution shown in FIG. 4, the second terminal device side may perform the solution related to the terminal device side shown in FIG. 3a or FIG. 3b. Alternatively, reference may not be made to the solution related to the terminal device side shown in FIG. 3a or FIG. 3b. Similarly, the solution shown in FIG. 3a or FIG. 3b imposes no limitation on the solution of the network device. In other words, in the solution shown in FIG. 3a or FIG. 3b, the network device may perform the solution related to the first network device shown in FIG. 4, or may not perform the related solution of the first network device shown in FIG. 3a or FIG. 3b. For example, the network device in FIG. 3a or FIG. 3b may perform the solution of the second network device. It should be noted that, for paging (CN paging) initiated by the core network device, the paging message may be sent to the terminal device through one or more other network elements, for example, through the access network device.

It should be understood that the conventional technology may change with evolution of the technical solutions, and the technical solutions provided in this application are not limited to the provided conventional technology.

It should be noted that different embodiments in this application or some steps in different embodiments may be mutually combined.

It may be understood that, to implement the functions in the foregoing embodiments, the communication apparatus includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

FIG. 5, FIG. 6, and FIG. 7 are schematic diagrams of structures of possible communication apparatuses according to embodiments of this application. The communication apparatus may be configured to implement functions of the terminal device in the foregoing method embodiments, and therefore can also implement beneficial effects of the foregoing method embodiments. The communication apparatus may alternatively be configured to implement functions of the first network device in the foregoing method embodiments, and therefore can also implement beneficial effects of the foregoing method embodiments. In embodiments of this application, the communication apparatus may be a terminal device, for example, may be the terminal device in FIG. 1 or FIG. 2, the first terminal device in FIG. 3a or FIG. 3b, or the second terminal device or the third terminal device in FIG. 4, or may alternatively be a module (for example, a chip) used in a terminal device. In embodiments of this application, the communication apparatus may alternatively be a network device, for example, may be the network device in FIG. 1 or FIG. 2, the fourth network device in FIG. 3a and FIG. 3b, or the first network device in FIG. 4, or may alternatively be a module (for example, a chip) used in a network device.

As shown in FIG. 5, the communication apparatus 1300 includes a processing unit 1310 and a transceiver unit 1320. The communication apparatus 1300 is configured to implement functions of the terminal device in the method embodiments shown in FIG. 3a and FIG. 3b, for example, may implement functions of the first terminal device in FIG. 3a or FIG. 3b.

The processing unit 1310 is configured to receive a first paging message by using the transceiver unit 1320. The terminal device initiates radio resource control RRC connection resume when a first condition is met. For related content of the first condition, refer to the description in the foregoing method embodiments. Details are not described herein again.

The processing unit 1310 is further configured to send, by using the transceiver unit 1320, a first message. The first message is used to request to resume an RRC connection.

When the communication apparatus 1300 is configured to implement functions of the first terminal device in the method embodiments shown in FIG. 3a and FIG. 3b, the processing unit 1310 is further configured to perform one of the following by using the transceiver unit 1320:

determining, by the terminal device, a first RRC connection resume cause according to a first policy, where the first policy includes at least one of an access identity, an RRC connection resume cause corresponding to unicast, or a rule for determining an RRC connection resume cause corresponding to unicast; determining, by the terminal device, the first RRC connection resume cause according to a second policy, where the second policy includes at least one of an access identity corresponding to multicast, an RRC connection resume cause corresponding to multicast, or a rule for determining an RRC connection resume cause corresponding to multicast; determining, by the terminal device, the first RRC connection resume cause according to the first policy and the second policy; or determining, by the terminal device, the first RRC connection resume cause according to a third policy, where the third policy includes at least one of an access identity, an RRC connection resume cause corresponding to unicast and multicast, or a rule for determining an RRC connection resume cause corresponding to unicast and multicast.

The processing unit 1310 is further configured to perform, by using the transceiver unit 1320, that the terminal device determines a second RRC connection resume cause according to the first policy. The terminal device determines a third RRC connection resume cause according to the second policy. The terminal device determines either the second RRC connection resume cause or the third RRC connection resume cause as the first RRC connection resume cause.

The processing unit 1310 is further configured to determine, by using the transceiver unit 1320, that the terminal device determines the first RRC connection resume cause according to the second policy. The second policy includes at least one of the access identity corresponding to multicast, the RRC connection resume cause corresponding to multicast, or the rule for determining an RRC connection resume cause corresponding to multicast.

The processing unit 1310 is further configured to perform, by using the transceiver unit 1320, that the terminal device enters an RRC idle state when a second condition is met. The second condition includes: The first paging message includes an identifier of a first multicast service and a second identifier of the terminal device, where the second identifier of the terminal device is associated with core network CN paging; or the first paging message includes the second identifier of the terminal device.

The processing unit 1310 is further configured to send a second message by using the transceiver unit 1320. The second message is used to request to set up the RRC connection.

As shown in FIG. 5, the communication apparatus 1300 includes the processing unit 1310 and the transceiver unit 1320. The communication apparatus 1300 is configured to implement functions of the network device in the method embodiments shown in FIG. 4, for example, implement functions of the first network device.

The processing unit 1310 is configured to perform, by using the transceiver unit 1320, that the first network device receives a second paging message, where the second paging message includes a third identifier of a second multicast service. The first network device performs one or more of the following: The first network device triggers RAN paging; the first network device pages a terminal device, where the terminal device is in an RRC inactive state, and the terminal device is associated with the second multicast service; or the first network device sends a third paging message to a second network device, where the third paging message indicates the second network device to page the terminal device.

The processing unit 1310 is further configured to perform, by using the transceiver unit 1320, that the first network device sends first control information and a fourth paging message. The first control information is used to schedule the fourth paging message, and the fourth paging message includes a third identifier of the second multicast service and/or an identifier of the terminal device; or the fourth paging message includes a fourth identifier of the second multicast service and/or an identifier of the terminal device.

The processing unit 1310 is specifically configured to perform, by using the transceiver unit 1320, that the first network device sends the first control information on a first paging occasion.

The processing unit 1310 is specifically configured to perform, by using the transceiver unit 1320, that the first network device pages the terminal device in a cell corresponding to a radio access network notification area.

For more detailed descriptions of the processing unit 1310 and the transceiver unit 1320, directly refer to related descriptions in the method embodiments shown in FIG. 3a and FIG. 3b, or FIG. 4. Details are not described herein.

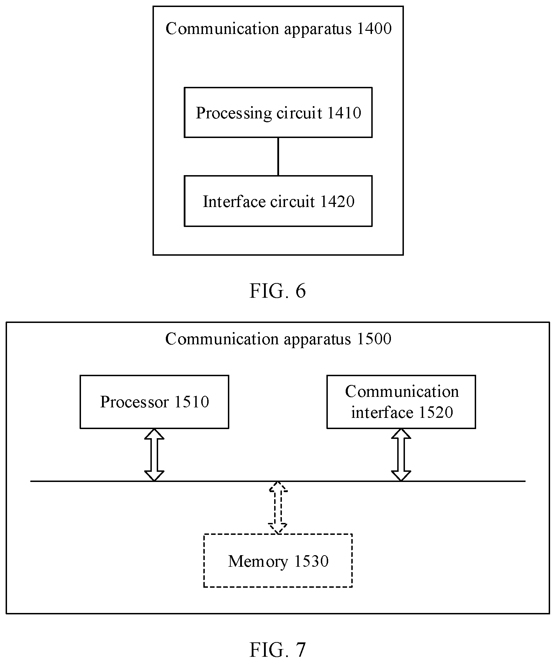

As shown in FIG. 6, the communication apparatus 1400 includes a processing circuit 1410 and an interface circuit 1420. The processing circuit 1410 and the interface circuit 1420 are coupled to each other. It may be understood that the interface circuit 1420 may be a transceiver or an input/output interface. Optionally, the communication apparatus 1400 may further include a memory, configured to store instructions to be executed by the processing circuit, store input data required for running instructions by the processing circuit 1410, or store data generated after the processing circuit 1410 runs the instructions.

When the communication apparatus 1400 is configured to implement the method shown in FIG. 3a and FIG. 3b, or FIG. 4, the processing circuit 1410 is configured to perform functions of the processing unit 1310, and the interface circuit 1420 is configured to perform functions of the transceiver unit 1320.

As shown in FIG. 7, a communication apparatus 1500 includes a processor 1510 and a communication interface 1520. The processor 1510 and the communication interface 1520 are coupled to each other. It may be understood that the communication interface 1520 may be a transceiver or an input/ output interface. Optionally, the communication apparatus 1500 may further include a memory 1530, configured to store instructions executed by the processor 1510, store input data required for running instructions by the processor 1510, or store data generated after the processor 1510 runs the instructions.

When the communication apparatus 1500 is configured to implement the method shown in FIG. 3a and FIG. 3b, or FIG. 4, the processor 1510 is configured to perform functions of the processing unit 1310, and the communication interface 1520 is configured to perform functions of the transceiver unit 1320.

When the communication apparatus 1500 is configured to implement functions of the terminal device in the method embodiments shown in FIG. 3a and FIG. 3b, the processor 1510 is configured to receive a first paging message through the communication interface 1520. The terminal device initiates radio resource control RRC connection resume when a first condition is met. For related content of the first condition, refer to the description in the foregoing method embodiments. Details are not described herein again.

When the communication apparatus 1500 is configured to implement functions of the first network device in the method embodiments shown in FIG. 4, the processor 1510 is configured to perform, through the communication interface 1520, that the first network device receives a second paging message, where the second paging message includes a third identifier of a second multicast service. The first network device performs one or more of the following: The first network device triggers RAN paging; the first network device pages a terminal device, where the terminal device is in an RRC inactive state, and the terminal device is associated with the second multicast service; or the first network device sends a third paging message to a second network device, where the third paging message indicates the second network device to page the terminal device.

When the communication apparatus is a chip used in the communication apparatus, the chip in the communication apparatus implements functions of the communication apparatus in the foregoing method embodiments. The chip in the communication apparatus receives information from another module (for example, a radio frequency module or an antenna) in the communication apparatus, where the information is sent by a network device to the communication apparatus. Alternatively, the chip in the communication apparatus sends information to another module (for example, a radio frequency module or an antenna) in the communication apparatus, where the information is sent by the communication apparatus to a network device

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor

According to the method provided in embodiments of this application, this application further provides a computer program product. The computer program product includes a computer program or instructions. When the computer program or the instructions are run on a computer, the computer is enabled to perform the method in any one of embodiments shown in FIG. 3a, FIG. 3b, or FIG. 4.

According to the method provided in embodiments of this application, this application further provides a computer-readable storage medium. The computer-readable medium stores a program or instructions. When the program or the instructions are run on a computer, the computer is enabled to perform the method in any one of embodiments shown in FIG. 3a, FIG. 3b, or FIG. 4.

According to the method provided in embodiments of this application, this application further provides a chip system. The chip system may include a processor. The processor is coupled to a memory, and may be configured to perform the method in any one of embodiments shown in FIG. 3a, FIG. 3b, or FIG. 4. Optionally, the chip system further includes a memory. The memory is configured to store a computer program (which may also be referred to as code or instructions). The processor is configured to invoke a computer program from the memory and run the computer program, so that a device on which the chip system is installed performs the method in any one of embodiments shown in FIG. 3a, FIG. 3b, or FIG. 4.

Based on the methods provided in embodiments of this application, this application further provides a system, including the foregoing terminal device and first network device.

The method steps in embodiments of this application may be implemented by hardware, or may be implemented by a processor by executing software instructions. The software instructions may include a corresponding software module. The software module may be stored in a random access memory (random access memory, RAM), a flash (flash) memory, a read-only memory (read-only memory, ROM), a programmable read-only memory, an erasable programmable read-only memory (erasable programmable ROM, EPROM), an electrically erasable programmable read-only memory, a register, a hard disk, a solid-state drive (solid-state drive, SSD), a removable hard disk, a compact disc read-only memory (compact disc read-only memory, CD-ROM), or any other form of storage medium that is well known in the art. For example, a storage medium is coupled to the processor, so that the processor can read information from the storage medium or write information into the storage medium. Certainly, the storage medium may be a component of the processor. The processor and the storage medium may be disposed in an ASIC. In addition, the ASIC may be located in a communication apparatus. Certainly, the processor and the storage medium may exist in the communication apparatus as discrete components.

All or some of foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a special-purpose computer, a computer network, a network device, a user device, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or description between different embodiments are/is consistent and may be mutually referenced, and technical features in different embodiments may be combined based on an internal logical relationship thereof, to form a new embodiment.

In embodiments of this application, "including" may be alternatively replaced with: existing, carrying, matching in a protocol, and the like. In embodiments of this application, "not including" may be alternatively replaced with: not existing, not carrying, not matching in a protocol, and the like.

"A plurality of" in this application refers to two or more than two. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A communication method, comprising:

   receiving, by a terminal device, a first paging message; and
   if the first paging message comprises an identifier of a first multicast service and does not comprise a second identifier of the terminal device, initiating, by the terminal device, radio resource control RRC connection resume, wherein
   the second identifier of the terminal device is associated with core network CN paging.

2. The method according to claim 1, wherein the method further comprises any one of the following:

   determining, by the terminal device, a first RRC connection resume cause according to a first policy, wherein the first policy comprises at least one of an access identity, an RRC connection resume cause corresponding to unicast, or a rule for determining an RRC connection resume cause corresponding to unicast;
   determining, by the terminal device, the first RRC connection resume cause according to a second policy, wherein the second policy comprises at least one of an access identity corresponding to multicast, an RRC connection resume cause corresponding to multicast, or a rule for determining an RRC connection resume cause corresponding to multicast;
   determining, by the terminal device, the first RRC connection resume cause according to the first policy and the second policy; or
   determining, by the terminal device, the first RRC connection resume cause according to a third policy, wherein the third policy comprises at least one of an access identity, an RRC connection resume cause corresponding to unicast and multicast, or a rule for determining an RRC connection resume cause corresponding to unicast and multicast.

3. The method according to claim 2, wherein the first policy comprises the access identity, and the determining, by the terminal device, a first RRC connection resume cause according to a first policy comprises one or more of the following:

   if an access identity 1 is configured by an upper layer of the terminal device, setting the first RRC connection resume cause to multimedia priority service-Priority Access mps-PriorityAccess;
   if the access identity 1 is not configured by the upper layer of the terminal device, and an access identity 2 is configured by the upper layer of the terminal device, setting the first RRC connection resume cause to mission critical service-Priority Access mcs-PriorityAccess;
   if the access identity 1 and the access identity 2 are not configured by the upper layer of the terminal device, and one or more of an access identity 11 to an access identity 15 are configured by the upper layer of the terminal device, setting the first RRC connection resume cause to highPriorityAccess highPriorityAccess; or
   if the access identity 1, the access identity 2, and the access identity 11 to the access identity 15 are not configured by the upper layer of the terminal device, setting the first RRC connection resume cause to mobile terminated access mt-Access.

4. The method according to any one of claims 1 to 3, wherein after the receiving, by a terminal device, a first paging message, the method further comprises:

   when a second condition is met, entering, by the terminal device, an RRC idle state, wherein
   the second condition comprises:

the first paging message comprises the identifier of the first multicast service and the second identifier of the terminal device, and the second identifier of the terminal device is associated with the core network CN paging; or
the first paging message comprises the second identifier of the terminal device.

5. The method according to any one of claims 1 to 4, wherein the first multicast service comprises:
a multicast service that the terminal device joins.

6. The method according to claim 2, wherein the determining, by the terminal device, the first RRC connection resume cause according to the first policy and the second policy comprises:

determining, by the terminal device, a second RRC connection resume cause according to the first policy;
determining, by the terminal device, a third RRC connection resume cause according to the second policy; and
determining, by the terminal device, either the second RRC connection resume cause or the third RRC connection resume cause as the first RRC connection resume cause.

7. The method according to any one of claims 1 to 3, wherein the first paging message comprises the identifier of the first multicast service and does not comprise an identifier of the terminal device, and the method further comprises:
determining, by the terminal device, the first RRC connection resume cause according to the second policy, wherein the second policy comprises at least one of the access identity corresponding to multicast, the RRC connection resume cause corresponding to multicast, or the rule for determining an RRC connection resume cause corresponding to multicast.

8. A communication method, comprising:

receiving, by a first network device, a second paging message, wherein the second paging message comprises a third identifier of a second multicast service; and
performing, by the first network device, one or more of the following:

triggering, by the first network device, radio access network RAN paging;
paging, by the first network device, a terminal device, wherein the terminal device is in an RRC inactive state, and the terminal device is associated with the second multicast service; or
sending, by the first network device, a third paging message to a second network device, wherein the third paging message indicates the second network device to page the terminal device.

9. The method according to claim 8, wherein the paging, by the first network device, a terminal device comprises:

sending, by the first network device, first control information and a fourth paging message, wherein
the first control information is used to schedule the fourth paging message, and the fourth paging message comprises a third identifier of the second multicast service and/or an identifier of the terminal device; or the fourth paging message comprises a fourth identifier of the second multicast service and/or an identifier of the terminal device.

10. The method according to claim 9, wherein the sending, by the first network device, first control information comprises:
sending, by the first network device, the first control information on a first paging occasion.

11. The method according to any one of claims 8 to 10, wherein the paging, by the first network device, a terminal device comprises:
paging, by the first network device, the terminal device in a cell corresponding to a radio access network-based notification area.

12. The method according to any one of claims 8 to 11, wherein the third paging message comprises one of the following:

the identifier of the terminal device;
the identifier of the terminal device and a discontinuous reception DRX cycle of the terminal device;
the identifier of the terminal device, the DRX cycle of the terminal device, and the third identifier of the second multicast service, the fourth identifier of the second multicast service, or a fifth identifier of the second multicast service; or

the third identifier of the second multicast service, the fourth identifier of the second multicast service, or the fifth identifier of the second multicast service.

13. The method according to any one of claims 8 to 12, wherein the first network device is a last serving node of the terminal device.

14. The method according to any one of claims 8 to 13, wherein the terminal device is in the radio resource control RRC inactive state.

15. The method according to any one of claims 8 to 14, wherein the second network device is located in the radio access network-based notification area.

16. The method according to any one of claims 8 to 15, wherein after the receiving, by a first network device, a second paging message, the method further comprises:
determining, by the first network device, the terminal device based on the third identifier of the second multicast service.

17. A communication apparatus, used in a terminal device, comprising a processing unit and a transceiver unit, wherein

the transceiver unit is configured to receive a first paging message; and
the processing unit is configured to: if the first paging message comprises an identifier of a first multicast service and does not comprise a second identifier of the terminal device, initiate radio resource control RRC connection resume, wherein
the second identifier of the terminal device is associated with core network CN paging.

18. The apparatus according to claim 17, wherein the processing unit is further configured to perform any one of the following:

determining a first RRC connection resume cause according to a first policy, wherein the first policy comprises at least one of an access identity, an RRC connection resume cause corresponding to unicast, or a rule for determining an RRC connection resume cause corresponding to unicast;
determining the first RRC connection resume cause according to a second policy, wherein the second policy comprises at least one of an access identity corresponding to multicast, an RRC connection resume cause corresponding to multicast, or a rule for determining an RRC connection resume cause corresponding to multicast;
determining the first RRC connection resume cause according to the first policy and the second policy; or
determining the first RRC connection resume cause according to a third policy, wherein the third policy comprises at least one of an access identity, an RRC connection resume cause corresponding to unicast and multicast, or a rule for determining an RRC connection resume cause corresponding to unicast and multicast.

19. The apparatus according to claim 18, wherein the first policy comprises the access identity, and the processing unit is specifically configured to perform one or more of the following:

if an access identity 1 is configured by an upper layer of the terminal device, setting the first RRC connection resume cause to multimedia priority service-Priority Access mps-PriorityAccess;
if the access identity 1 is not configured by the upper layer of the terminal device, and an access identity 2 is configured by the upper layer of the terminal device, setting the first RRC connection resume cause to mission critical service-Priority Access mcs-PriorityAccess;
if the access identity 1 and the access identity 2 are not configured by the upper layer of the terminal device, and one or more of an access identity 11 to an access identity 15 are configured by the upper layer of the terminal device, setting the first RRC connection resume cause to highPriorityAccess highPriorityAccess; or
if the access identity 1, the access identity 2, and the access identity 11 to the access identity 15 are not configured by the upper layer of the terminal device, setting the first RRC connection resume cause to mobile terminated access mt-Access.

20. The apparatus according to any one of claims 17 to 19, wherein the processing unit is further configured to:

when a second condition is met, control the terminal device to enter an RRC idle state, wherein

the second condition comprises:

the first paging message comprises the identifier of the first multicast service and the second identifier of the terminal device, and the second identifier of the terminal device is associated with the core network CN paging; or
the first paging message comprises the second identifier of the terminal device.

21. The apparatus according to any one of claims 17 to 20, wherein the first multicast service comprises:
a multicast service that the terminal device joins.

22. The apparatus according to claim 18, wherein the processing unit is specifically configured to:

determine a second RRC connection resume cause according to the first policy;
determine a third RRC connection resume cause according to the second policy; and
determine either the second RRC connection resume cause or the third RRC connection resume cause as the first RRC connection resume cause.

23. The apparatus according to any one of claims 17 to 19, wherein the first paging message comprises the identifier of the first multicast service and does not comprise an identifier of the terminal device, and the processing unit is further configured to:
determine the first RRC connection resume cause according to the second policy, wherein the second policy comprises at least one of the access identity corresponding to multicast, the RRC connection resume cause corresponding to multicast, or the rule for determining an RRC connection resume cause corresponding to multicast.

24. A communication apparatus, used in a first network device, comprising a processing unit and a transceiver unit, wherein

the transceiver unit is configured to receive a second paging message, wherein the second paging message comprises a third identifier of a second multicast service; and
the processing unit is configured to perform one or more of the following:

triggering radio access network RAN paging by using the transceiver unit;
paging a terminal device by using the transceiver unit, wherein the terminal device is in an RRC inactive state, and the terminal device is associated with the second multicast service; or
sending a third paging message to a second network device by using the transceiver unit, wherein the third paging message indicates the second network device to page the terminal device.

25. The apparatus according to claim 24, wherein the transceiver unit is specifically configured to:

send first control information and a fourth paging message, wherein
the first control information is used to schedule the fourth paging message, and the fourth paging message comprises a third identifier of the second multicast service and/or an identifier of the terminal device; or the fourth paging message comprises a fourth identifier of the second multicast service and/or an identifier of the terminal device.

26. The apparatus according to claim 25, wherein the transceiver unit is specifically configured to:
send the first control information on a first paging occasion.

27. The apparatus according to any one of claims 24 to 26, wherein the transceiver unit is specifically configured to:
page the terminal device in a cell corresponding to a radio access network-based notification area.

28. The apparatus according to any one of claims 24 to 27, wherein the third paging message comprises one of the following:

the identifier of the terminal device;
the identifier of the terminal device and a discontinuous reception DRX cycle of the terminal device;
the identifier of the terminal device, the DRX cycle of the terminal device, and the third identifier of the second multicast service, the fourth identifier of the second multicast service, or a fifth identifier of the second multicast service; or

the third identifier of the second multicast service, the fourth identifier of the second multicast service, or the fifth identifier of the second multicast service.

29. The apparatus according to any one of claims 24 to 28, wherein the first network device is a last serving node of the terminal device.

30. The apparatus according to any one of claims 24 to 29, wherein the terminal device is in the radio resource control RRC inactive state.

31. The apparatus according to any one of claims 24 to 30, wherein the second network device is located in the radio access network-based notification area.

32. The apparatus according to any one of claims 24 to 31, wherein the processing unit is further configured to:
determine the terminal device based on the third identifier of the second multicast service.

33. A communication apparatus, used in a terminal device, comprising a processor and a communication interface, wherein

the communication interface is configured to receive a first paging message; and
the processor is configured to: if the first paging message comprises an identifier of a first multicast service and does not comprise a second identifier of the terminal device, initiate radio resource control RRC connection resume, wherein
the second identifier of the terminal device is associated with core network CN paging.

34. The apparatus according to claim 33, wherein the processor is further configured to perform any one of the following:

determining a first RRC connection resume cause according to a first policy, wherein the first policy comprises at least one of an access identity, an RRC connection resume cause corresponding to unicast, or a rule for determining an RRC connection resume cause corresponding to unicast;
determining the first RRC connection resume cause according to a second policy, wherein the second policy comprises at least one of an access identity corresponding to multicast, an RRC connection resume cause corresponding to multicast, or a rule for determining an RRC connection resume cause corresponding to multicast;
determining the first RRC connection resume cause according to the first policy and the second policy; or
determining the first RRC connection resume cause according to a third policy, wherein the third policy comprises at least one of an access identity, an RRC connection resume cause corresponding to unicast and multicast, or a rule for determining an RRC connection resume cause corresponding to unicast and multicast.

35. The apparatus according to claim 34, wherein the first policy comprises the access identity, and the processor is specifically configured to perform one or more of the following:

if an access identity 1 is configured by an upper layer of the terminal device, setting the first RRC connection resume cause to multimedia priority service-Priority Access mps-PriorityAccess;
if the access identity 1 is not configured by the upper layer of the terminal device, and an access identity 2 is configured by the upper layer of the terminal device, setting the first RRC connection resume cause to mission critical service-Priority Access mcs-PriorityAccess;
if the access identity 1 and the access identity 2 are not configured by the upper layer of the terminal device, and one or more of an access identity 11 to an access identity 15 are configured by the upper layer of the terminal device, setting the first RRC connection resume cause to highPriorityAccess highPriorityAccess; or
if the access identity 1, the access identity 2, and the access identity 11 to the access identity 15 are not configured by the upper layer of the terminal device, setting the first RRC connection resume cause to mobile terminated access mt-Access.

36. The apparatus according to any one of claims 33 to 35, wherein the processor is further configured to:

when a second condition is met, control the terminal device to enter an RRC idle state, wherein
the second condition comprises:

the first paging message comprises the identifier of the first multicast service and the second identifier of the terminal device, and the second identifier of the terminal device is associated with the core network CN paging; or
the first paging message comprises the second identifier of the terminal device.

**37.** The apparatus according to any one of claims 33 to 36, wherein the first multicast service comprises:
a multicast service that the terminal device joins.

**38.** The apparatus according to claim 34, wherein the processor is specifically configured to:

determine a second RRC connection resume cause according to the first policy;
determine a third RRC connection resume cause according to the second policy; and
determine either the second RRC connection resume cause or the third RRC connection resume cause as the first RRC connection resume cause.

**39.** The apparatus according to any one of claims 33 to 35, wherein the first paging message comprises the identifier of the first multicast service and does not comprise an identifier of the terminal device, and the processor is further configured to:
determine the first RRC connection resume cause according to the second policy, wherein the second policy comprises at least one of the access identity corresponding to multicast, the RRC connection resume cause corresponding to multicast, or the rule for determining an RRC connection resume cause corresponding to multicast.

**40.** A communication apparatus, used in a first network device, comprising a processor and a communication interface, wherein

the communication interface is configured to receive a second paging message, wherein the second paging message comprises a third identifier of a second multicast service; and
the processor is configured to perform one or more of the following:

triggering radio access network RAN paging through the communication interface;
paging a terminal device through the communication interface, wherein the terminal device is in an RRC inactive state, and the terminal device is associated with the second multicast service; or
sending a third paging message to a second network device through the communication interface, wherein the third paging message indicates the second network device to page the terminal device.

**41.** The apparatus according to claim 40, wherein the communication interface is specifically configured to:

send first control information and a fourth paging message, wherein
the first control information is used to schedule the fourth paging message, and the fourth paging message comprises a third identifier of the second multicast service and/or an identifier of the terminal device; or the fourth paging message comprises a fourth identifier of the second multicast service and/or an identifier of the terminal device.

**42.** The apparatus according to claim 41, wherein the communication interface is specifically configured to:
send the first control information on a first paging occasion.

**43.** The apparatus according to any one of claims 40 to 42, wherein the communication interface is specifically configured to:
page the terminal device in a cell corresponding to a radio access network-based notification area.

**44.** The apparatus according to any one of claims 40 to 43, wherein the third paging message comprises one of the following:

the identifier of the terminal device;
the identifier of the terminal device and a discontinuous reception DRX cycle of the terminal device;
the identifier of the terminal device, the DRX cycle of the terminal device, and the third identifier of the second multicast service, the fourth identifier of the second multicast service, or a fifth identifier of the second multicast service; or

the third identifier of the second multicast service, the fourth identifier of the second multicast service, or the fifth identifier of the second multicast service.

45. The apparatus according to any one of claims 40 to 44, wherein the first network device is a last serving node of the terminal device.

46. The apparatus according to any one of claims 40 to 45, wherein the terminal device is in the radio resource control RRC inactive state.

47. The apparatus according to any one of claims 40 to 46, wherein the second network device is located in the radio access network-based notification area.

48. The apparatus according to any one of claims 40 to 47, wherein the processor is further configured to: determine the terminal device based on the third identifier of the second multicast service.

49. A communication apparatus, comprising a processing circuit and an interface circuit, wherein the interface circuit is configured to: receive a signal from another communication apparatus other than the communication apparatus, and transmit the signal to a processor; or send a signal from a processor to another communication apparatus other than the communication apparatus, wherein the processing circuit is configured to implement the method according to any one of claims 1 to 7 or the method according to any one of claims 8 to 16 by using a logic circuit or executing code instructions.

50. A computer-readable storage medium, wherein the storage medium stores a computer program or instructions, and when the computer program or the instructions are executed by a communication apparatus, the method according to any one of claims 1 to 7 or the method according to any one of claims 8 to 16 is implemented.

FIG. 1

FIG. 2

S301: A first terminal device receives a first paging message

First condition is met

Second condition is met

S302: The first terminal device initiates RRC connection resume

S303: The first terminal device enters an RRC idle state

S306: The first terminal device determines a first RRC connection resume cause

S305: The first terminal device sends a second message

S304: The first terminal device sends a first message

FIG. 3a

S301A: A first terminal device receives a first paging message

Fourth condition is met

Fifth condition is met

S302A: The first terminal device initiates RRC connection resume

S303A: The first terminal device enters an RRC idle state

S306A: The first terminal device determines a first RRC connection resume cause

S305A: The first terminal device sends a second message

S304A: The first terminal device sends a first message

FIG. 3b

S401: A first network device receives a second paging message

S402: The first network device determines a second terminal device

S403: The first network device calculates/determines a first PO

S404: The first network device triggers RAN paging

S404A: The first network device determines to trigger RAN paging

S405: The first network device pages the second terminal device

S406: The first network device sends a third paging message to a second network device, where the third paging message indicates the second network device to page the second terminal device

FIG. 4

Communication apparatus 1300

Processing unit 1310

Transceiver unit 1320

FIG. 5

Communication apparatus 1400

Processing circuit 1410

Interface circuit 1420

FIG. 6

Communication apparatus 1500

Processor 1510

Communication
interface 1520

Memory 1530

FIG. 7

## INTERNATIONAL SEARCH REPORT

| International application No. |
| --- |
| **PCT/CN2022/126257** |

### A. CLASSIFICATION OF SUBJECT MATTER

H04W 4/06(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 组播, 广播, MBS, 寻呼, 终端, 激活, 空闲, 连接, RRC, 标识, 恢复, RAN, multicast, broadcast, paging, terminal, active, idle, connected, RRC, identity, resume, RAN

### C. DOCUMENTS CONSIDERED TO BE RELEVANT

| Category* | Citation of document, with indication, where appropriate, of the relevant passages | Relevant to claim No. |
| --- | --- | --- |
| X | LG ELECTRONICS INC. "RRC connection establishment/resume initiated by group paging" *3GPP TSG-RAN WG2 Meeting #115 electronic, R2-2107877*, 27 August 2021 (2021-08-27), pp. 1-3 | 1-50 |
| X | CN 111432470 A (CHENDU TD TECHNOLOGY LTD.) 17 July 2020 (2020-07-17) description, paragraphs [0017]-[0033] | 1-50 |
| A | CN 108307487 A (CHENDU TD TECHNOLOGY LTD.) 20 July 2018 (2018-07-20) entire document | 1-50 |
| A | CN 111543094 A (BEIJING XIAOMI MOBILE SOFTWARE CO., LTD.) 14 August 2020 (2020-08-14) entire document | 1-50 |
| A | US 2013242848 A1 (LG ELECTRONICS INC.) 19 September 2013 (2013-09-19) entire document | 1-50 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2022** | **15 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/126257**

| Patent document cited in search report | | | Publication date (day/month/year) | Patent family member(s) | | | Publication date (day/month/year) |
|---|---|---|---|---|---|---|---|
| CN | 111432470 | A | 17 July 2020 | None | | | |
| CN | 108307487 | A | 20 July 2018 | None | | | |
| CN | 111543094 | A | 14 August 2020 | WO | 2021196216 | A1 | 07 October 2021 |
| US | 2013242848 | A1 | 19 September 2013 | WO | 2012074257 | A2 | 07 June 2012 |
| | | | | CN | 103238359 | A | 07 August 2013 |
| | | | | JP | 2014502075 | A | 23 January 2014 |
| | | | | KR | 20120061741 | A | 13 June 2012 |
| | | | | IN | 201301468 | A | 11 October 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111236108